# EUROPEAN PATENT SPECIFICATION

(11) **EP 2 824 806 B1**
(45) Date of publication and mention of the grant of the patent: **04.03.2020**
(21) Application number: 13175692.6
(22) Date of filing: 09.07.2013
(51) Int. Cl.: H02K 5/20, H02K 9/04, H02K 9/19, B63J 2/12, B63H 5/125, B63H 21/38

(54) **Ship's propulsion unit**
Schiffsmaschinenanlage
Unité de propulsion de navire

(43) Date of publication of application: 14.01.2015
(73) Proprietor: ABB Schweiz AG, 5400 Baden (CH)
(72) Inventor: Säkkinen, Petri, 00980 Helsinki (FI); Toivanen, Olli, 00980 Helsinki (FI)
(74) Representative: Boco IP Oy Ab

(56) References cited:
- EP-A1- 0 590 867
- EP-A2- 1 959 544
- DE-A1- 19 627 323
- DE-A1- 19 826 229
- DE-A1-102011 005 588
- US-A1- 2004 266 277

## Description

### Field of the invention

The invention relates to a ship's propulsion unit as defined in the preamble of independent claim 1.

The invention relates to ship's propulsion units such as azimuthing propulsion units as presented in US 5,403,216.

US 6,312,298 B1 presents in an electromotive drive system in an improved form of a propeller motor for a ship, the cooling of the motor in a simple manner is provided. For recooling a circulating coolant, an annular duct is provided, which is arranged inside a shaft-like supporting part on its wall. With the assistance of this supporting part, the propeller motor is arranged, gondola-like, on the lower side of the ship.

US 6,485,339 B1 presents an electric propulsion pod for a ship having an electric propulsion pod heat rejection member. The electric propulsion pod is attached below the ship by a hollow ship access shaft. The electric propulsion pod contains an electric motor for producing a water propulsion. The electric motor generates an amount of heat that is conducted and subsequently released into the water through the electric propulsion pod and ship access shaft surfaces. The heat rejection member is fitted for increasing the conduction and subsequent release of the electric motor heat.

US 7,186,156 B1 presents a propulsion unit for propelling a waterborne vessel includes an electric motor arranged to provide propulsion, and a housing arranged to contain the motor. The interior of the housing is maintained at an increased pressure of above roughly 2 bar to increase the cooling effect of a cooling gas maintained therein. An end region of the housing is provided with a heat exchange mechanism arranged to cool a cooling gas passing thereover. The heat exchange mechanism is associated with the housing such that, in use, water surrounding the housing absorbs heat therefrom.

WO0154973 presents a propulsion unit arrangement for a ship. The arrangement includes a motor unit comprising a motor housing which is arranged in the water and which comprises a motor and any control means related thereto, as well as a propeller which is arranged at a motor shaft. Said motor unit comprises an electrical motor for which the cooling is arranged to take place via the surface of the motor's whole circumference through the motor's casing structure directly into the water which surrounds said unit.

### Objective of the invention

The object of the invention is to provide efficient cooling of a ship's propulsion unit.

### Short description of the invention

The ship's propulsion unit of the invention is characterized by the definitions of independent claim 1.

Preferred embodiments of the ship's propulsion unit are defined in the dependent claims.

The propulsion unit comprises a shell structure arranged at least partly below a hull of the ship and immersible at least partly in water so that the shell structure is at least partly surrounded by water, and an electric motor for rotating a propeller outside the shell structure. The electric motor has a stator and a rotor for rotating in the stator. The electric motor is arranged in a motor housing section of the shell structure so that the stator of the electric motor is form-fitted into a cylindrical section of the motor housing section of the shell structure. The cylindrical section has a cylindrical outer surface. The shell structure includes a support section having a lower end connected to the motor housing section of the shell structure and an upper end connected to the hull of the ship.

The invention is based on using liquid in a closed liquid cooling system for transferring thermal energy from gas circulating in closed gas circulation cooling system through the electric motor to water surrounding the propulsion unit. The closed gas circulation cooling system contains gas and comprises a gas circulation means for circulating gas through channels in the electric motor. The closed liquid cooling system has an inner space containing liquid. The propulsion unit comprises a gas-liquid-heat exchanger in fluid connection with the closed gas circulation cooling system and in fluid connection with the closed liquid cooling system for exchanging thermal energy between gas circulating in the closed gas circulation cooling system and liquid in the closed liquid cooling system. In the propulsion unit, the closed gas circulation cooling system, the closed liquid cooling system, and the gas-liquid-heat exchanger are all parts of the propulsion unit.

Because the closed gas circulation cooling system, the closed liquid cooling system, and the gas-liquid-heat exchanger are all parts of the propulsion unit, installing and mounting of the propulsion unit to a ship is easy, because no cooling lines for cooling fluid such as for cooling liquid or for cooling gas for cooling the electric propeller motor is necessarily needed between the propulsion unit and the ship.

In the propulsion unit, the closed liquid cooling system, closed gas circulation cooling system, and the gas-liquid-heat exchanger are arranged fully enclosed by the shell structure of the propulsion unit. "Closed" in means in this connection for example that water surrounding the propulsion unit, when the propulsion unit is at least partly immersed in water, is not let into the closed liquid cooling system, nor is liquid discharged from the closed liquid cooling system into water surrounding the propulsion unit, when the propulsion unit is at least partly immersed in water.

In the propulsion unit, the surface of the propulsion unit is more effectively used for transferring thermal energy from the electric motor to the water surrounding the propulsion unit than in a solution where the electric motor is only cooled through the motor's casing structure to the water surrounding the propulsion unit. Because the cooling is effective, a more powerful electric motor may be used in comparison to a solution where the electric motor is only cooled through the motor's casing structure to the water surrounding the propulsion unit.

In a preferred embodiment of the invention the electric motor is an induction motor. In an induction motor a significant amount of thermal energy is generated in the rotor and the propulsion unit is especially advantageous, because the propulsion unit provides for effective cooling of the rotor of the induction motor. However, the same cooling principle can be used to cool any type of electric motor, for example a permanent magnet synchronous motor.

### List of figures

In the following the invention will described in more detail by referring to the figures, of which
Figure 1 shows a first embodiment of the propulsion unit,
Figure 2 the function principle of the propulsion unit shown in figure 1,
Figure 3 shows the propulsion unit shown in figure 1 as seen from one side,
Figure 4 shows a variant of the first embodiment shown in figure 1,
Figures 5 to 8 shows some alternative configurations of section X-X in figures 1 to 3,
Figure 9 shows the configuration of section X-X of the variant of the first embodiment shown in figure 4,
Figures 10 to 12 shows some alternative configurations of section Y-Y in figure 3,
Figure 13 shows the configuration of section Y-Y of the variant of the first embodiment shown in figure 4,
Figure 14 shows a second embodiment of the propulsion unit,
Figure 15 the function principle of the propulsion unit shown in figure 14,
Figure 16 shows the propulsion unit shown in figure 14 as seen from one side,
Figure 17 shows a configuration of section X-X in figures 14 to 17,
Figure 18 shows a third embodiment of the propulsion unit,
Figure 19 the function principle of the propulsion unit shown in figure 18,
Figure 20 shows the propulsion unit shown in figure 18 as seen from one side,
Figure 21 shows a configuration of section X-X in figures 18 to 20,
Figure 22 shows a fourth embodiment of the propulsion unit,
Figure 23 the function principle of the propulsion unit shown in figure 22,
Figure 24 shows the propulsion unit shown in figure 22 as seen from one side,
Figures 25 to 28 shows some alternative configurations of section X-X in figures 22 to 24,
Figure 29 shows a fifth embodiment of the propulsion unit,
Figure 30 the function principle of the propulsion unit shown in figure 29,
Figure 31 shows the propulsion unit shown in figure 29 as seen from one side,
Figures 32 to 35 shows some alternative configurations of section X-X in figures 29 to 31,
Figure 36 shows a sixth embodiment of the propulsion unit,
Figure 37 the function principle of the propulsion unit shown in figure 36,
Figure 38 shows the propulsion unit shown in figure 36 as seen from one side,
Figures 39 to 42 shows some alternative configurations of section X-X in figures 36 to 38,
Figure 43 shows a seventh embodiment of the propulsion unit,
Figure 44 the function principle of the propulsion unit shown in figure 43,
Figure 45 shows the propulsion unit shown in figure 43 as seen from one side,
Figures 46 to 50 shows some alternative configurations of section X-X in figures 43 to 45,
Figure 51 shows an eight embodiment of the propulsion unit,
Figure 52 the function principle of the propulsion unit shown in figure 51,
Figure 53 shows the propulsion unit shown in figure 51 as seen from one side,
Figures 54 to 56 shows some alternative configurations of section X-X in figures 51 to 53,
Figure 57 shows a ninth embodiment of the propulsion unit,
Figure 58 the function principle of the propulsion unit shown in figure 57,
Figure 59 shows the propulsion unit shown in figure 57 as seen from one side,
Figure 60 shows a configuration of section X-X in figures 57 to 59,
Figure 61 shows a tenth embodiment of the propulsion unit,
Figure 62 shows a configuration of section X-X in figure 61,
Figure 63 shows an eleventh embodiment of the propulsion unit,
Figure 64 the function principle of the propulsion unit shown in figure 63,
Figure 65 shows the propulsion unit shown in figure 63 as seen from one side,
Figure 66 shows a first configuration of section X-X in figures 64 and 65,
Figure 67 shows a first configuration of section Y-Y in figures 64 and 65,
Figure 68 shows a second configuration of section X-X in figures 64 and 65,
Figure 69 shows a second configuration of section Y-Y in figures 64 and 65,
Figure 70 shows a twelfth embodiment of the propulsion unit,
Figure 71 the function principle of the propulsion unit shown in figure 70,
Figure 72 is another view of the propulsion unit shown in figure 70, and
Figure 73 shows a configuration of section Y-Y in figures 71 and 72.

### Detailed description of the invention

In the following the ship's propulsion unit and some preferred embodiments and variants of the ship's propulsion unit will be described in greater detail.

The ship's propulsion unit (not marked with a reference numeral) such as a ship's azimuthing propulsion unit comprises a shell structure 1 arranged below a hull 2 of the ship (not marked with a reference numeral) and immersible at least partly in water (not marked with a reference numeral) so that the shell structure 1 is at least partly surrounded by water.

The propulsion unit comprises additionally an electric motor 3 for rotating a propeller 4 outside the shell structure 1. The electric motor 3 has a stator 5 and a rotor 6 for rotating in the stator 5. In the figures a propeller shaft 7 is connected to the rotor 6 for rotating with the rotor 6 as the rotor 6 rotates in the stator 5. In the figures the propeller shaft 7 is rotatable supported by means of bearing arrangements 8. In the figures the propeller 4 is attached to the propeller shaft 7.

The electric motor 3 is arranged in a motor housing section 9 of the shell structure 1 so that the stator 5 of the electric motor 3 is form-fitted into a cylindrical section 10 of the motor housing section 9 of the shell structure 1.

The cylindrical section 10 has a cylindrical outer surface 11.

The shell structure 1 includes a support section 26 having a lower end (not marked with a reference numeral) connected to the motor housing section 9 of the shell structure 1 and an upper end (not marked with a reference numeral) connected to the hull 2 of the ship. The upper end of the support section 26 may be connected to the hull 2 of the ship by means of a turning arrangement (not shown in the drawings) for turning the propulsion unit with respect to the hull 2 of the ship.

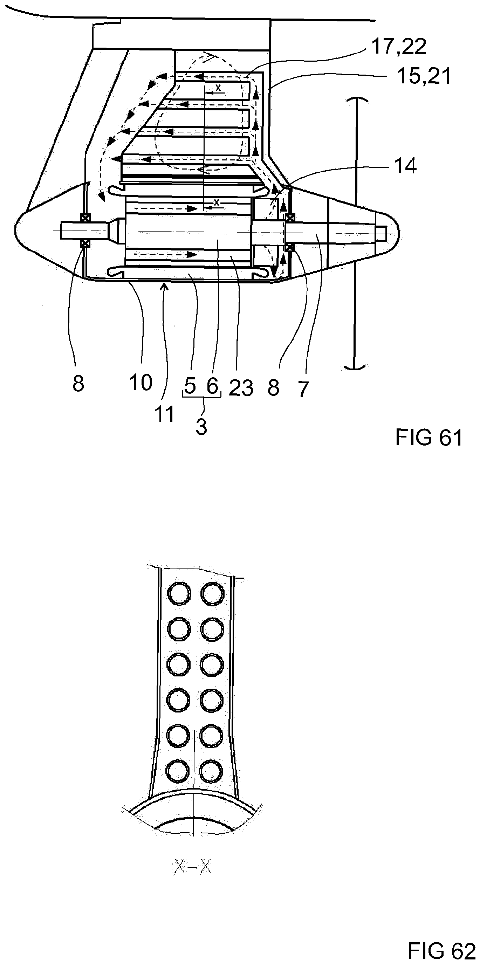

The propulsion unit comprises a closed gas circulation cooling system 12 containing gas 13 such as air and comprising a gas circulation means 14 for circulating gas 13 through channels 23 in the electric motor 3. The channels 23 through the electric motor 3 are preferably, but not necessarily, formed by at least one of channels 23 in the rotor of the electric motor 3 and a channel 23 formed by an air gap (not marked with a reference numeral) between the stator 5 and the rotor 6 of the electric motor 3. The gas circulation means can be in the form of a separate gas circulation means or arranged in connection with the propeller shaft as in the tenth embodiment of the propulsion unit shown in figures 61 and 62.

The propulsion unit comprises a closed liquid cooling system 15 having an inner space (not marked with a reference numeral) containing liquid 16 such as water.

The inner space of the closed liquid cooling system 15 is preferably, but not necessarily, partly limited by the shell structure 1 of the propulsion unit so that liquid 16 in the inner space of the closed liquid cooling system 15 is in direct contact with the shell structure 1 of the propulsion unit for exchanging thermal energy between liquid 16 in the closed liquid cooling system 15 and water surrounding the propulsion unit via the shell structure 1 of the propulsion unit.

The propulsion unit comprises a gas-liquid-heat exchanger 17 in fluid connection with the closed gas circulation cooling system 12 and in fluid connection with the closed liquid cooling system 15 for exchanging thermal energy between gas 13 circulating in the closed gas circulation cooling system 12 and liquid 16 in the closed liquid cooling system 15.

The closed gas circulation cooling system 12, the closed liquid cooling system 15, and the gas-liquid-heat exchanger 17 are all parts of the propulsion unit.

The support section 26 of the shell structure 1 may be provided with an opening 18. Such opening 18 may be closed with covering parts 36 provided with apertures 37 for enabling water surrounding the propulsion unit to enter the opening 18 via the apertures 37 and correspondingly for enabling water in the opening 18 to exit the opening via the apertures 37. It is alternatively possible that such opening 18 may be closed with covering parts 36 so that apertures 37 for enabling water surrounding the propulsion unit to enter the opening 18 via the apertures 37 and correspondingly for enabling water in the opening 18 to exit the opening via the apertures 37 is formed.

The lower end of the support section 26 of the shell structure 1 may be connected to the motor housing section 9 of the shell structure 1 so that an opening 18 is formed in the support section 26 of the shell structure 1. Such opening 18 may be closed with covering parts 36 provided with apertures 37 for enabling water surrounding the propulsion unit to enter the opening 18 via the apertures 37 and correspondingly for enabling water in the opening 18 to exit the opening via the apertures 37. It is alternatively possible that such opening 18 may be closed with covering parts 36 so that apertures 37 for enabling water surrounding the propulsion unit to enter the opening 18 via the apertures 37 and correspondingly for enabling water in the opening 18 to exit the opening via the apertures 37 is formed.

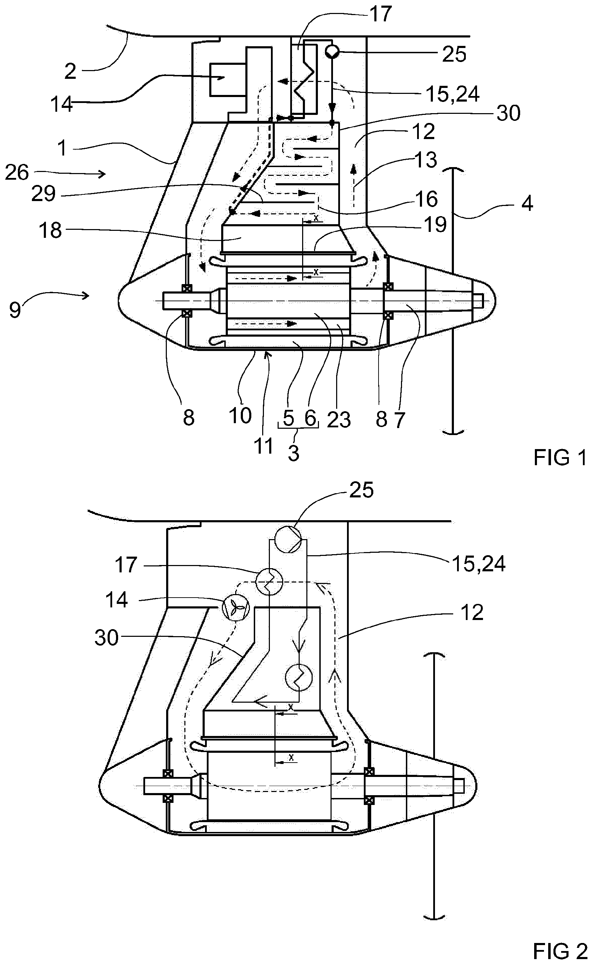

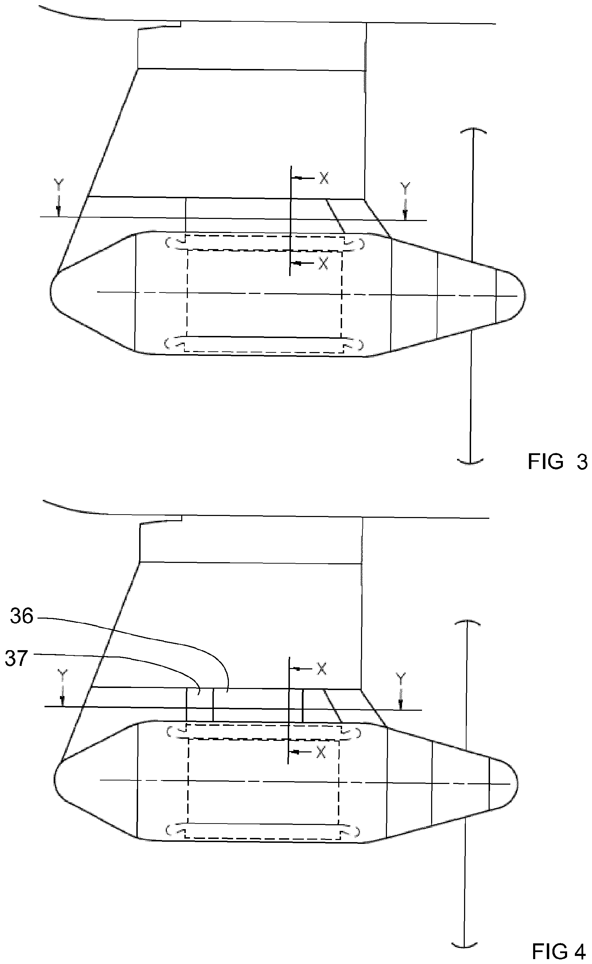

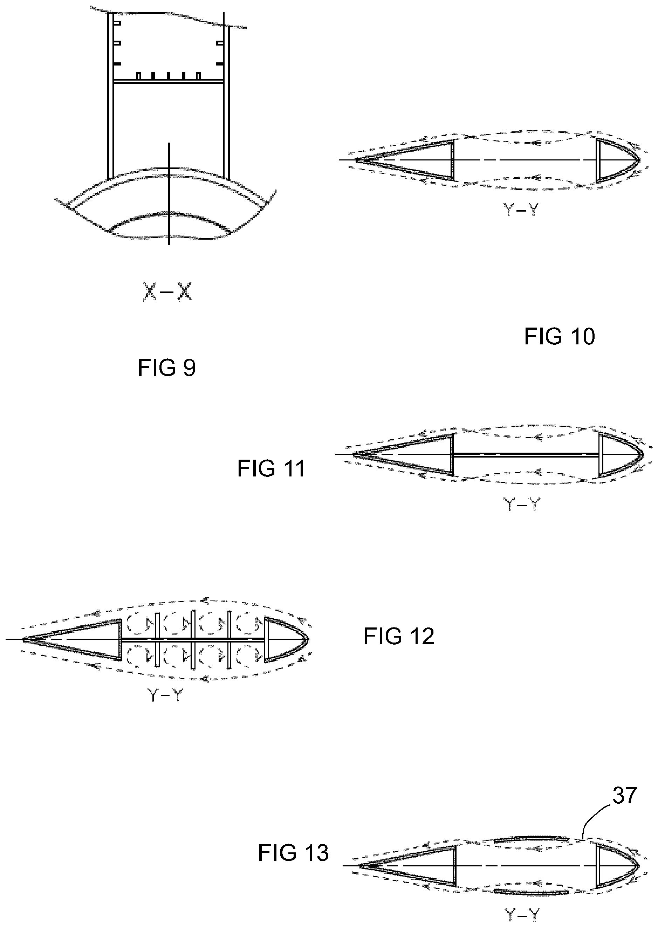

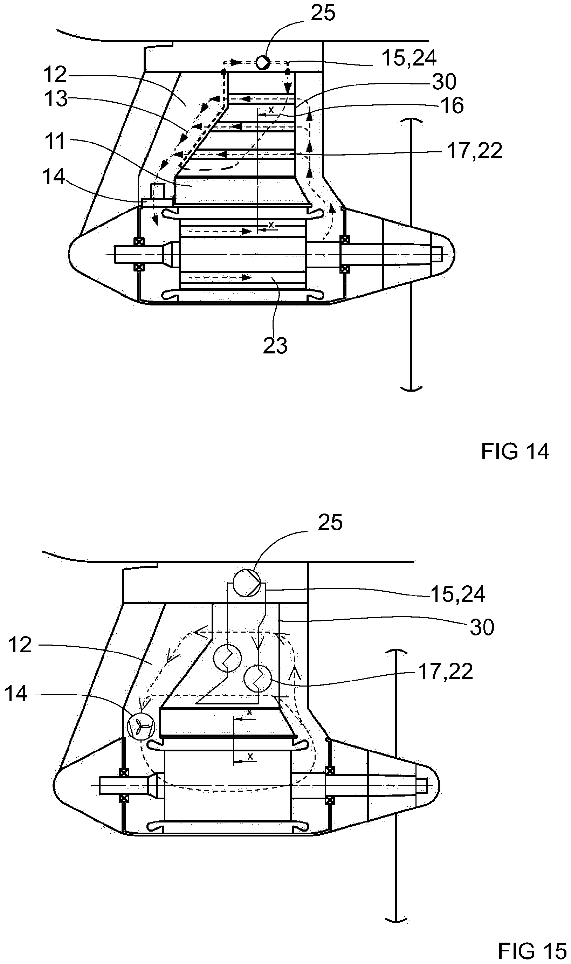

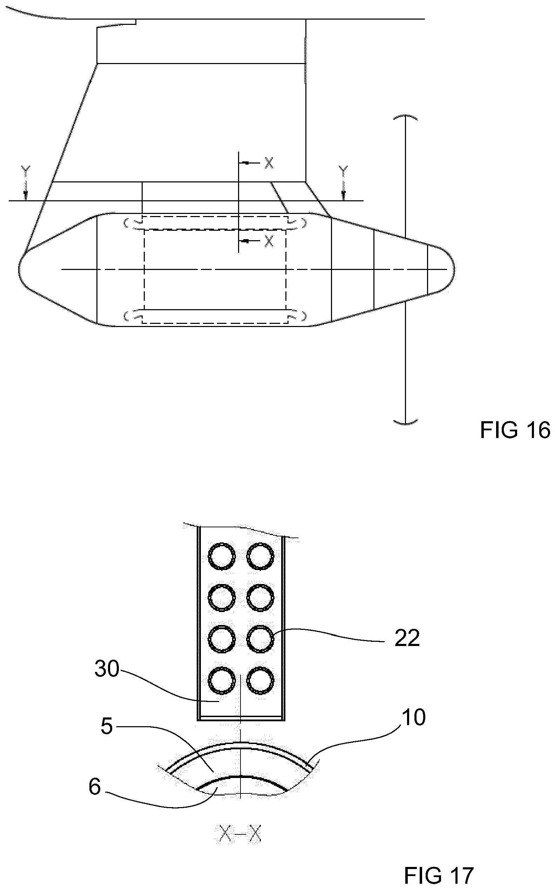

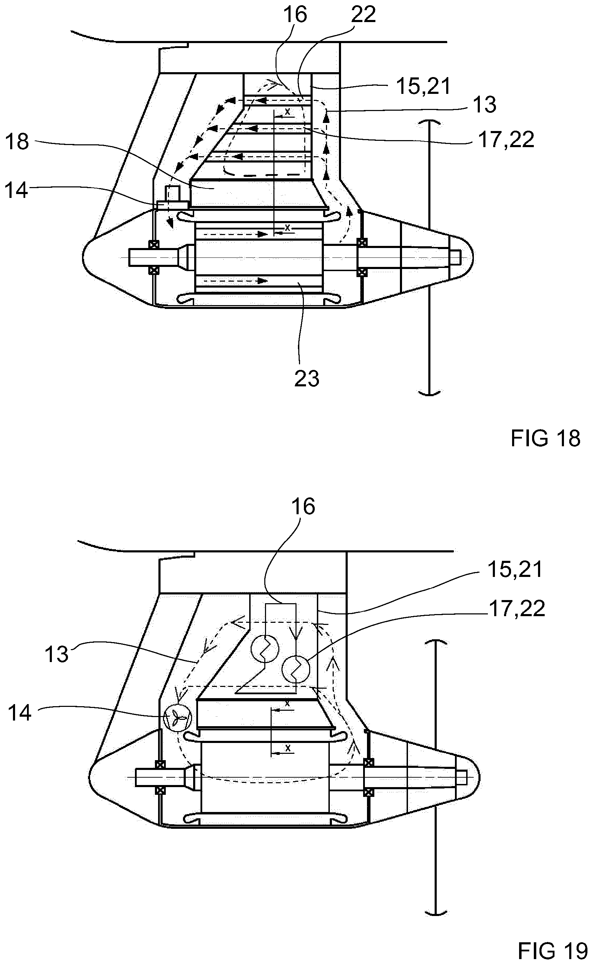

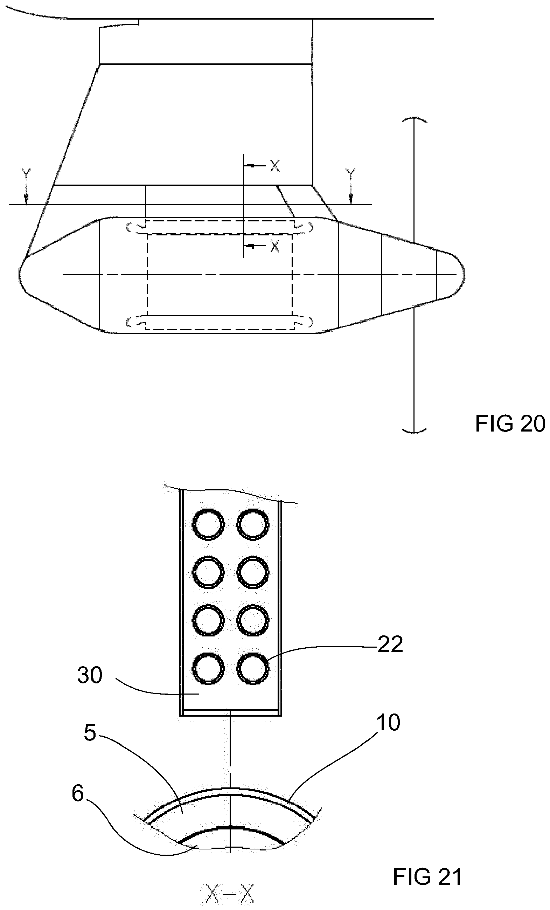

The lower end of the support section 26 of the shell structure 1 may connected to the motor housing section 9 of the shell structure 1 so that an opening 18 is formed between the support section 26 of the shell structure 1 and the motor housing section 9 of the shell structure 1 and so that a cylindrical part 19 of the cylindrical outer surface 11 of the cylindrical section 10 of the motor housing section 9 forms a part of an outermost surface (not marked with a reference numeral) of the propulsion unit, as is the case in the first embodiment of the propulsion unit shown in figures 1 to 13, in the second embodiment of the propulsion unit shown in figures 14 to 17, and in the third embodiment of the propulsion unit shown in figures 18 to 21. Such opening 18 may be closed with covering parts 36 provided with apertures 37 for enabling water surrounding the propulsion unit to enter the opening 18 via the apertures 37 and correspondingly for enabling water in the opening 18 to exit the opening via the apertures 37. It is alternatively possible that such opening 18 may be closed with covering parts 36 so that apertures 37 for enabling water surrounding the propulsion unit to enter the opening 18 via the apertures 37 and correspondingly for enabling water in the opening 18 to exit the opening via the apertures 37 is formed.

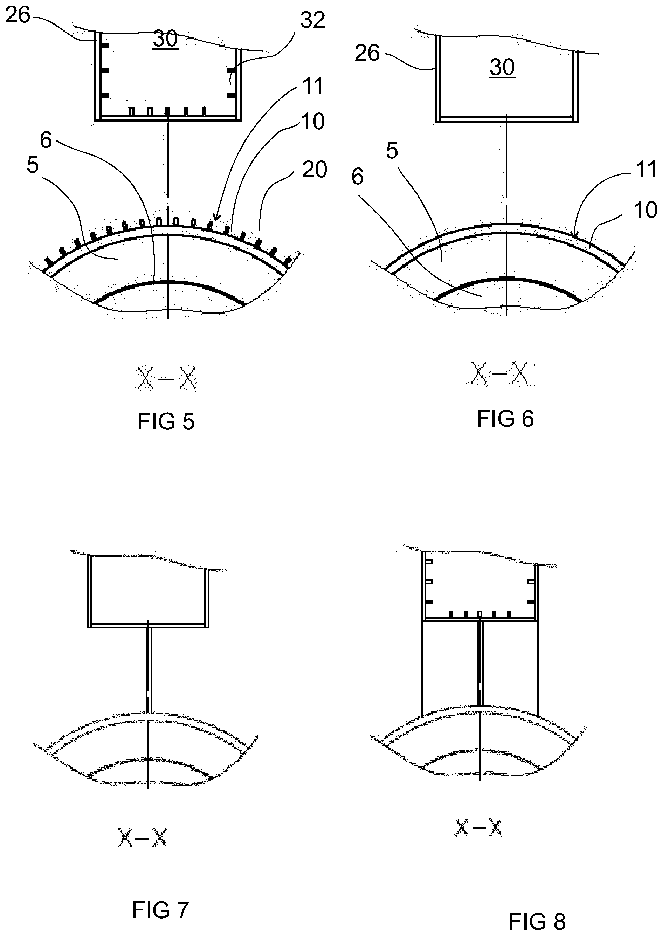

Such cylindrical part 19 of the cylindrical outer surface 11 of the cylindrical section 10 of the motor housing section 9 may be provided with projecting heat-exchanging elements 20 for enhancing transfer of thermal energy between the electric motor 3 in the cylindrical section 10 of the motor housing section 9 and water surrounding the cylindrical part 19 of the cylindrical section 10 of the motor housing section 9, as is shown in figure 5.

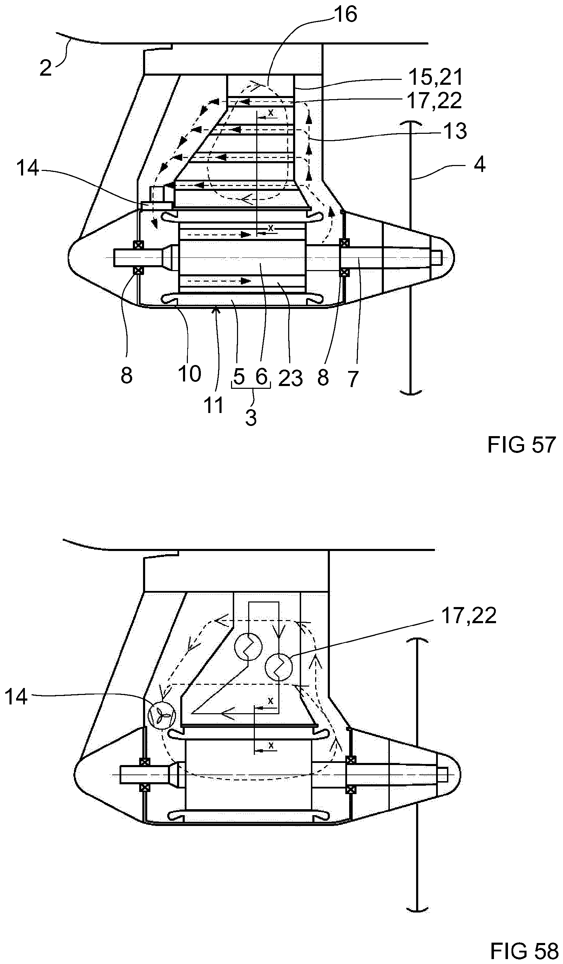

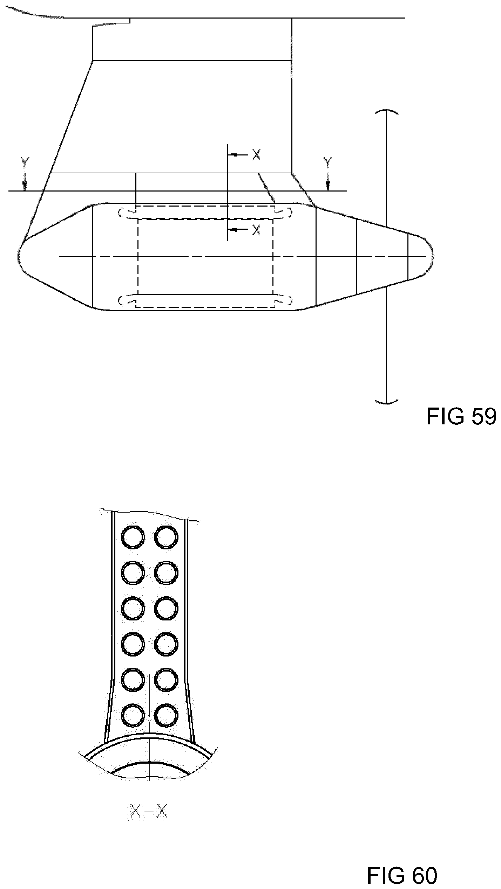

In the propulsion unit, the closed liquid cooling system 15 may be in the form of a closed liquid tank 21 forming said inner space containing liquid 16, as is the case in the third embodiment of the propulsion unit shown in figures 18 to 21, in the ninth embodiment of the propulsion unit shown in figures 57 to 60, and in the tenth embodiment of the propulsion unit shown in figures 61 and 62.

Such closed liquid tank 21 may be partly limited by the cylindrical outer surface 11 of the cylindrical section 10 of the motor housing section 9 so that liquid 16 in the closed liquid tank 21 is in direct contact with the cylindrical outer surface 11 of the cylindrical section 10 of the motor housing section 9 for exchanging thermal energy between the electrical motor arranged in the cylindrical section 10 of the motor housing section 9 and liquid 16 in the closed liquid tank 21 via the cylindrical section 10 of the motor housing section 9, as is the case in the ninth embodiment of the propulsion unit shown in figures 57 to 60, and in the tenth embodiment of the propulsion unit shown in figures 61 and 62.

Such closed liquid tank 21 may be partly limited by the support section 26 of the shell structure 1 of the propulsion unit so that liquid 16 in the closed liquid tank 21 is in direct contact with the support section 26 of the shell structure 1 of the propulsion unit for exchanging thermal energy between liquid 16 in the closed liquid tank 21 and water surrounding the support section 26 of the shell structure 1 of the propulsion unit via the shell structure 1 of the propulsion unit, as is the case in the third embodiment of the propulsion unit shown in figures 18 to 21, in the ninth embodiment of the propulsion unit shown in figures 57 to 60, and in the tenth embodiment of the propulsion unit shown in figures 61 and 62.

If the closed liquid cooling system 15 is in the form of a closed liquid tank 21 forming said inner space containing liquid 16, the gas-liquid-heat exchanger 17 may be formed by ducts 22 in fluid communication with the closed gas circulation cooling system 12 so that the ducts 22 extends through the closed liquid tank 21 for leading gas 13 circulating in the closed gas circulation cooling system 12 in said ducts 22 through the closed liquid tank 21 and for exchanging thermal energy between gas 13 flowing in said ducts 22 and liquid 16 in the closed liquid tank 21, as is the case in the third embodiment of the propulsion unit shown in figures 18 to 21, in the ninth embodiment of the propulsion unit shown in figures 57 to 60, and in the tenth embodiment of the propulsion unit shown in figures 61 and 62.

If the closed liquid cooling system 15 is in the form of a closed liquid tank 21 forming said inner space containing liquid 16, inner surface of the closed liquid tank 21 may be provided with projecting heat exchanging elements 32 projecting from the support section 26 of the shell structure 1 of the propulsion unit into the closed liquid tank for enhancing transfer of thermal energy between liquid 16 in the inner space of the closed liquid tank 21 and water surrounding the shell structure of the propulsion unit.

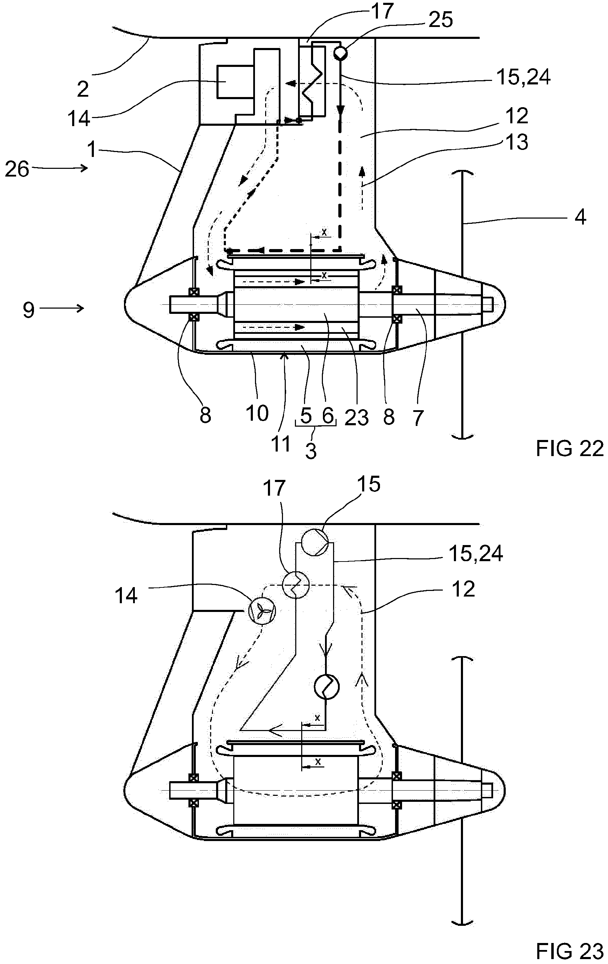

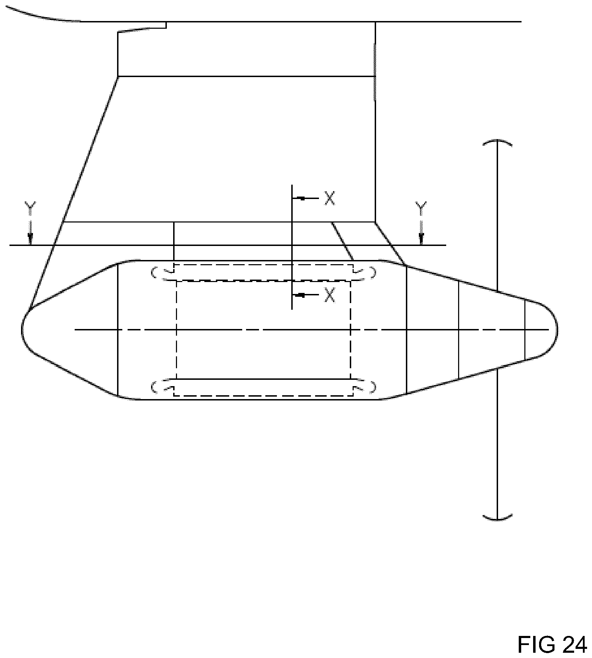

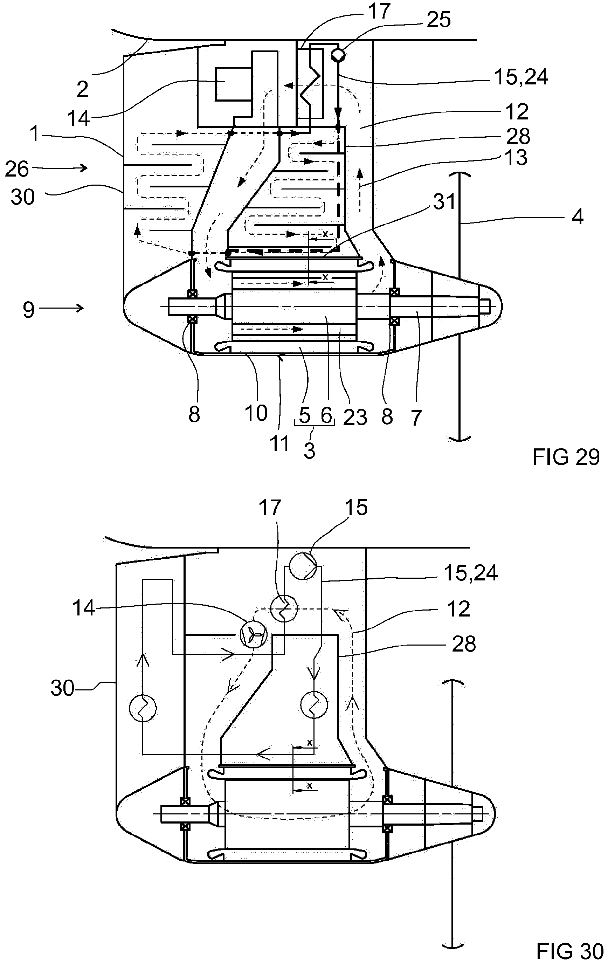

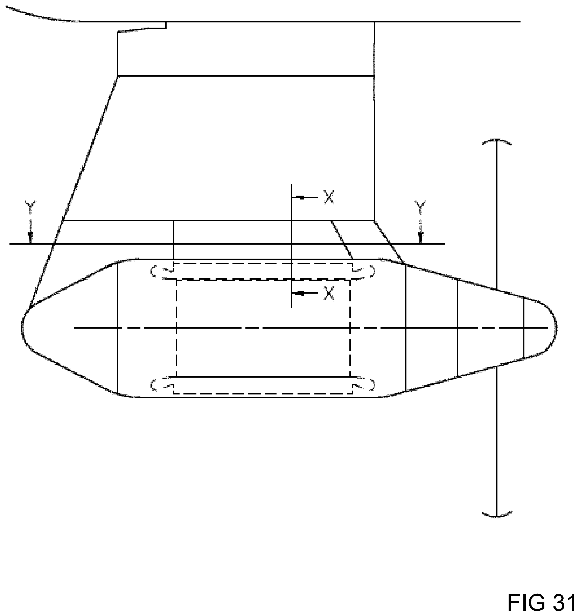

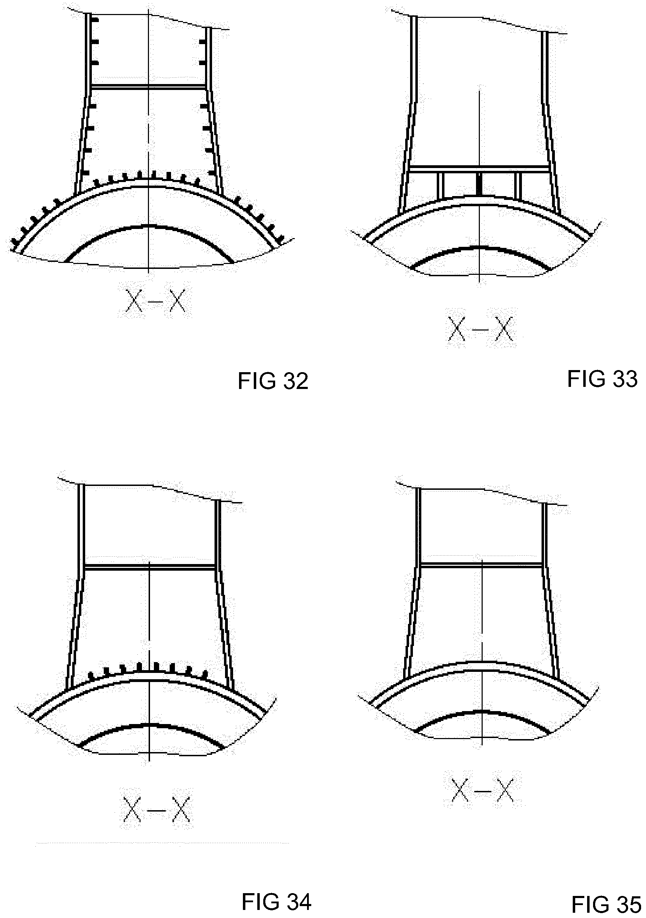

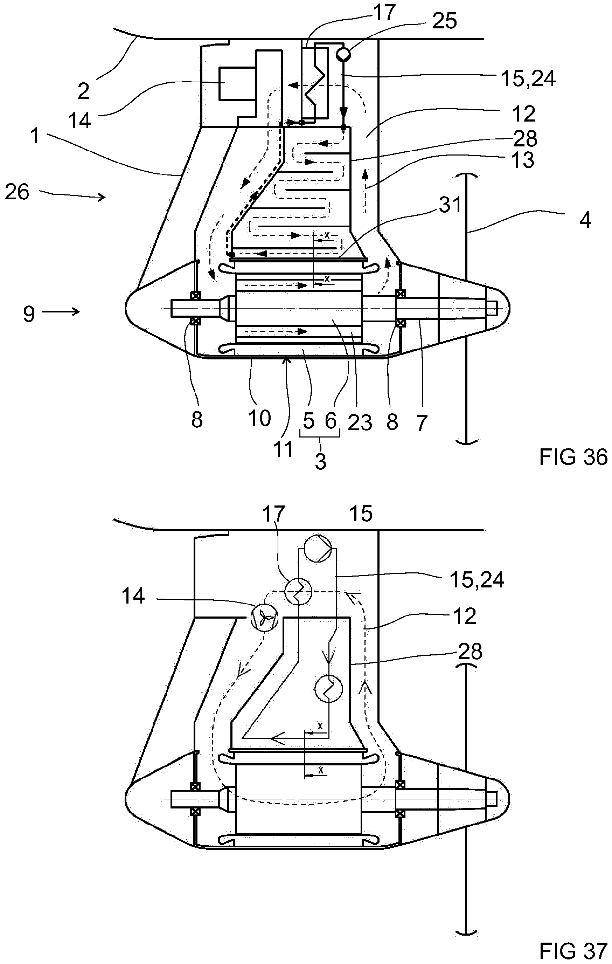

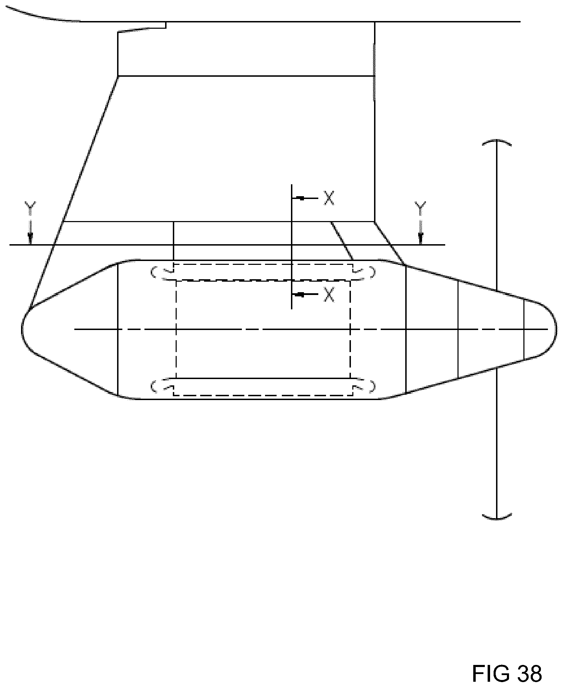

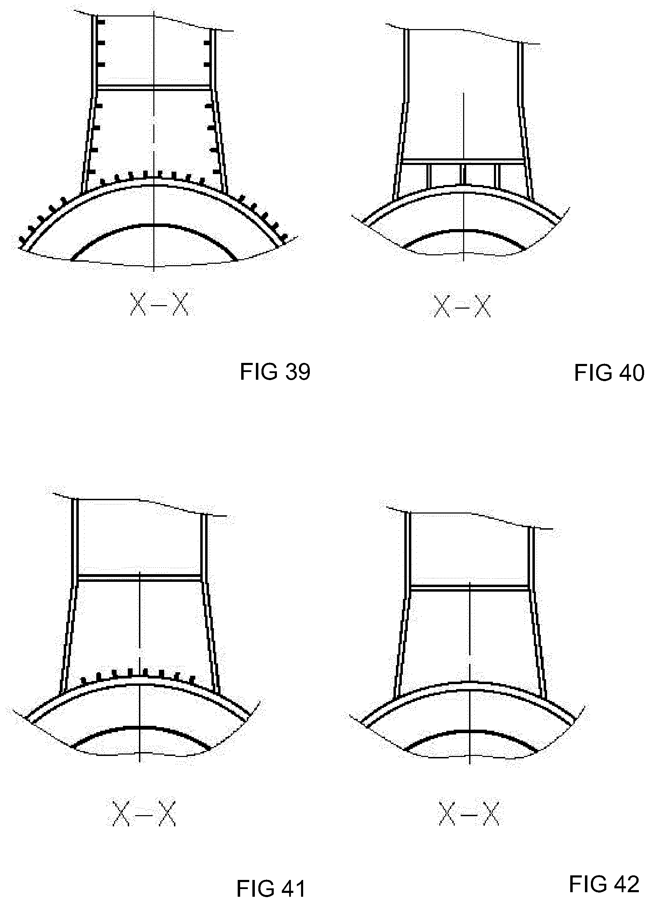

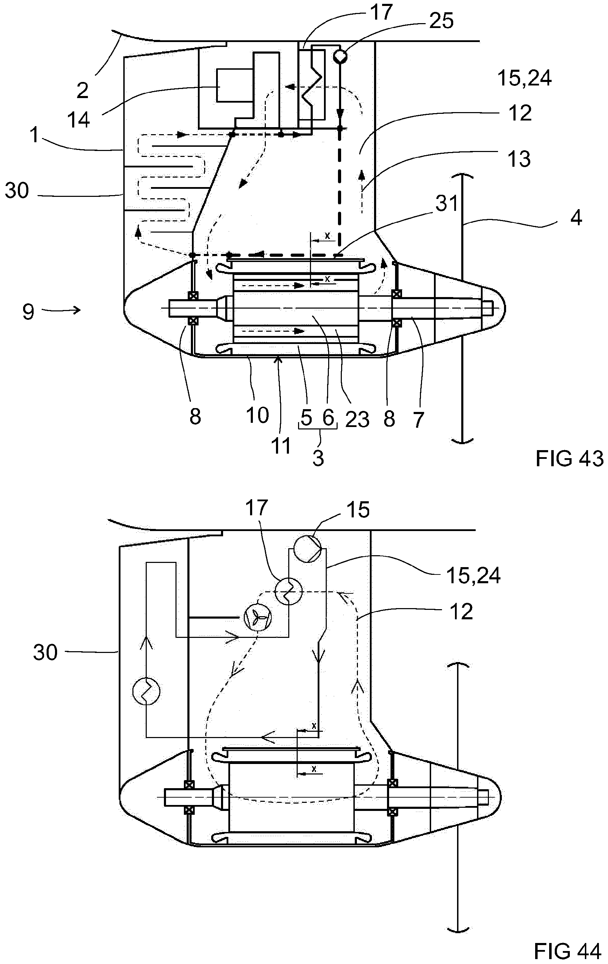

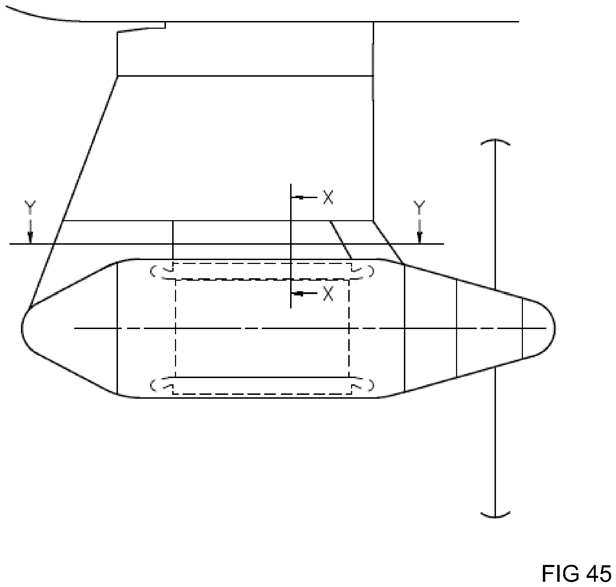

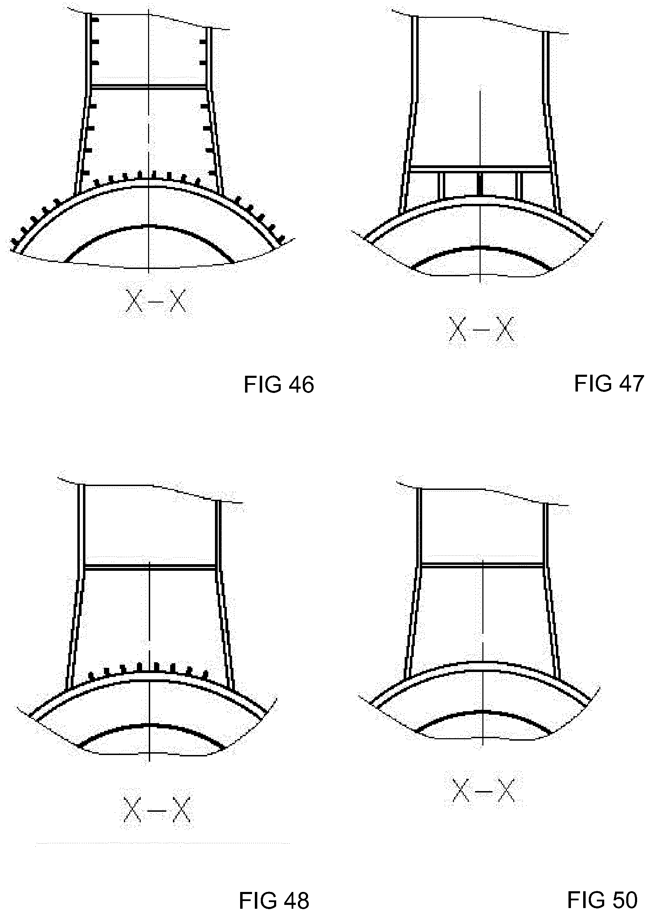

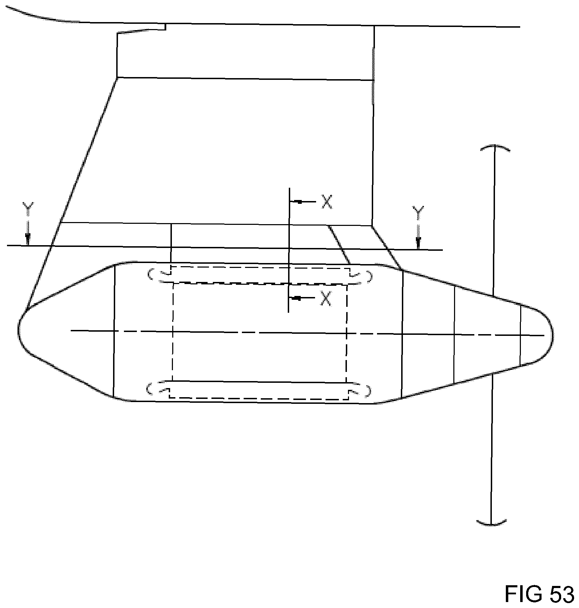

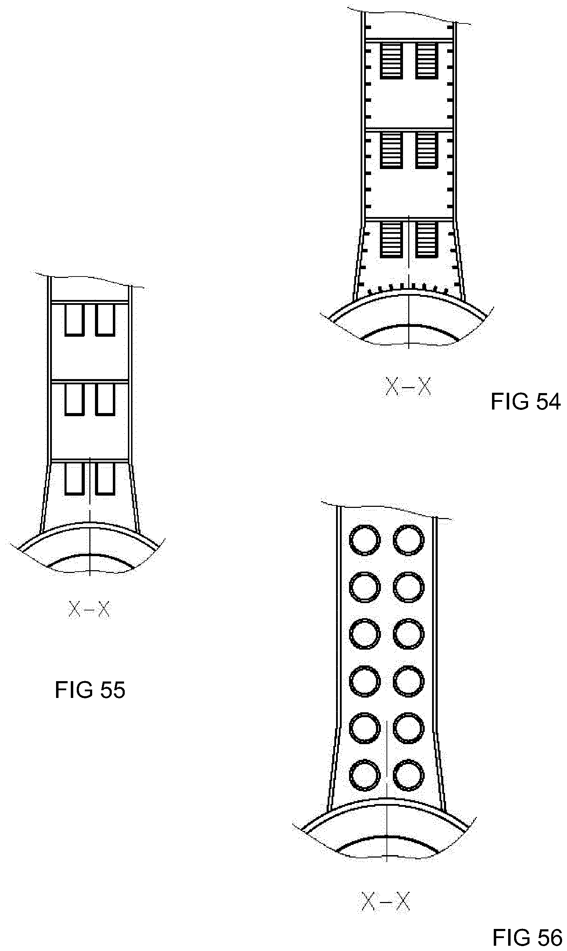

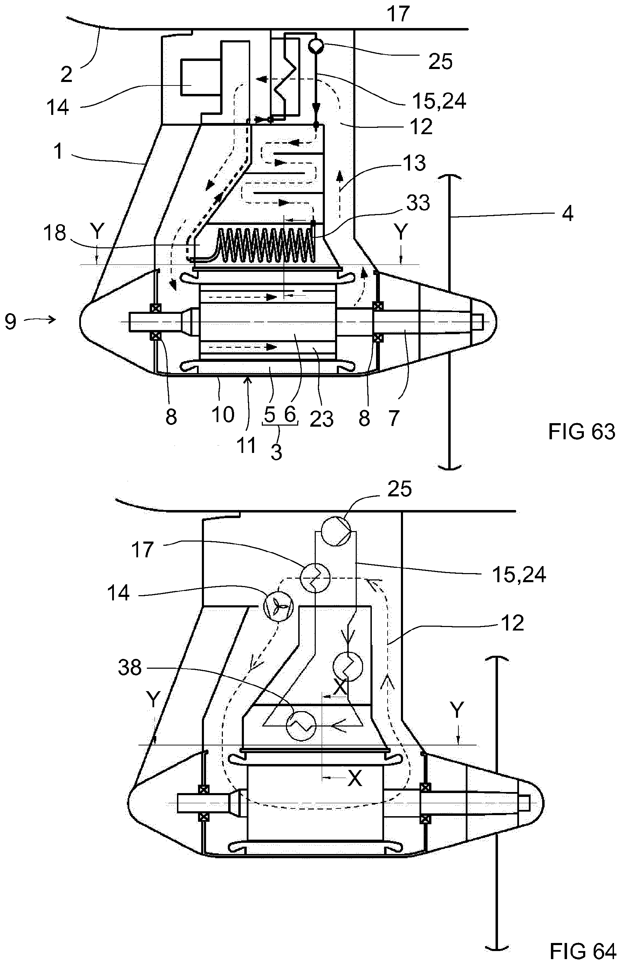

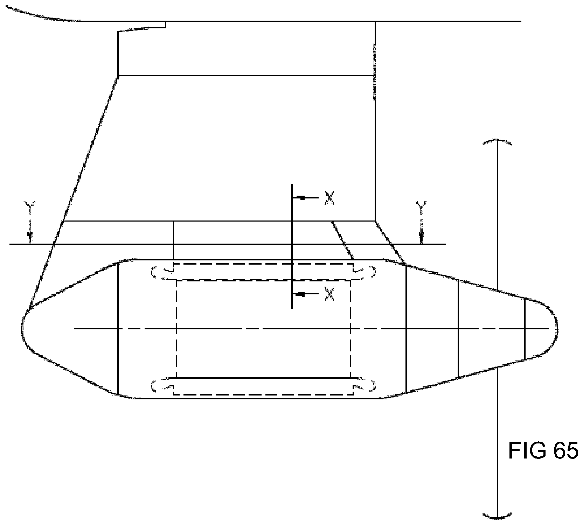

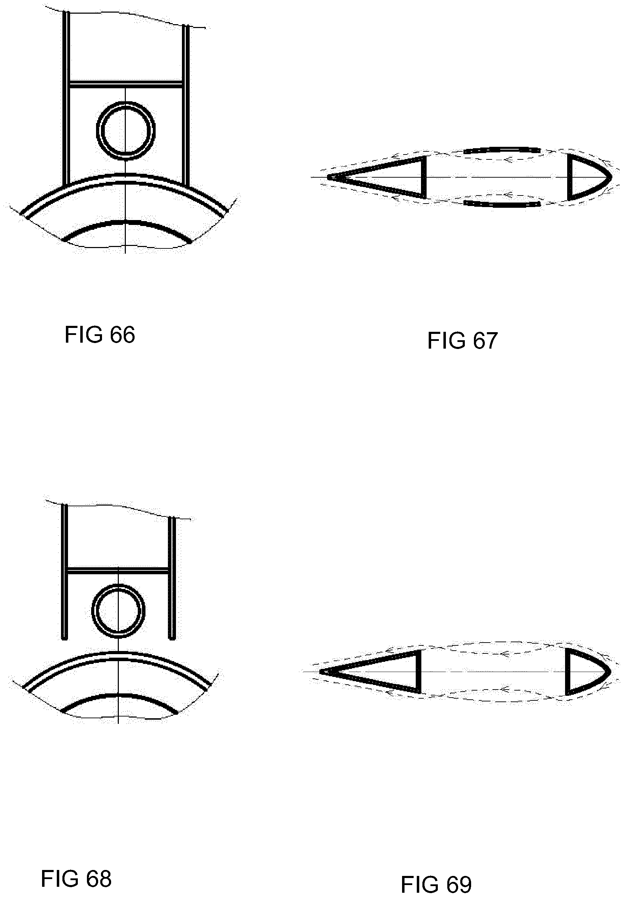

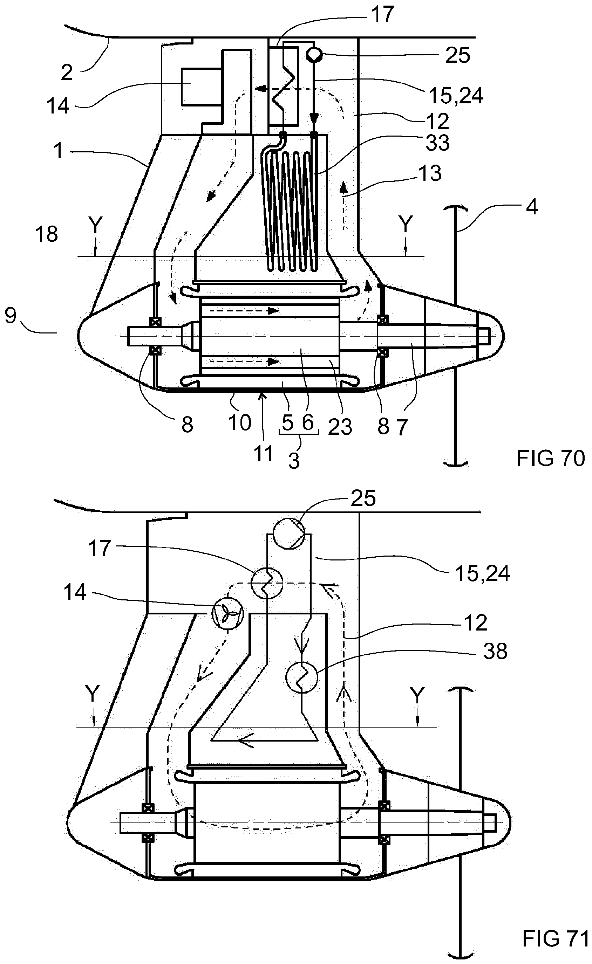

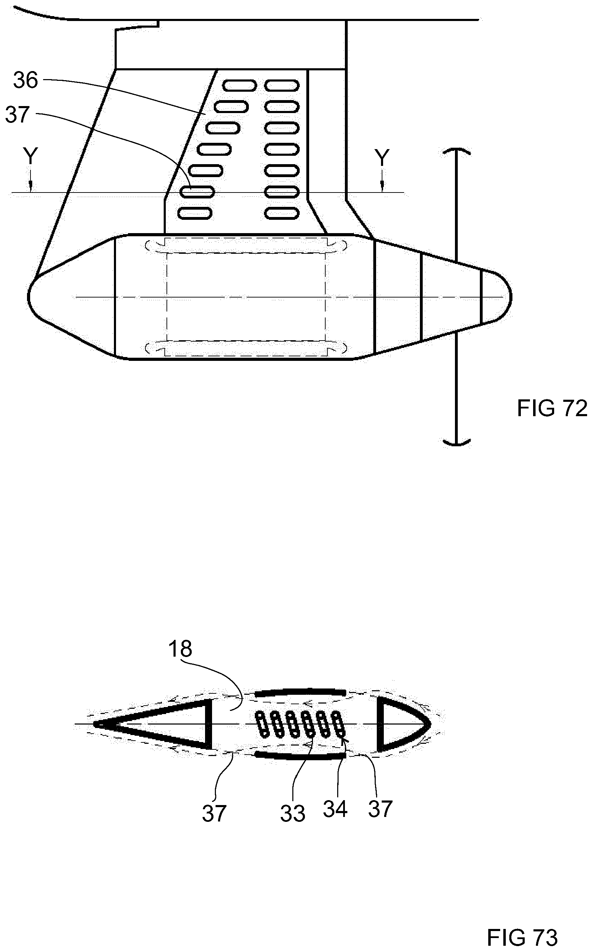

In the propulsion unit, the closed liquid cooling system 15 may be in the form of a closed liquid circulation cooling system 24 containing liquid 16 and forming said inner space containing liquid 16 and provided with liquid circulation means 25 for circulating liquid 16 in the inner space of the closed liquid circulation cooling system 24, as is the case in the first embodiment of the propulsion unit shown in figures 1 to 13, in the second embodiment of the propulsion unit shown in figures 14 to 17, in the fourth embodiment of the propulsion unit shown in figures 22 to 28, in the fifth embodiment of the propulsion unit shown in figures 29 to 35, in the sixth embodiment of the propulsion unit shown in figures 36 to 42, in the seventh embodiment of the propulsion unit shown in figures 43 and 50, in the eleventh embodiment of the propulsion unit shown in figures 36 to 69, and in the twelfth embodiment of the propulsion unit shown in figures 70 to 73.

The closed liquid circulation cooling system 24 may be partly formed by a tube section 33 having an outer surface 34 that is in direct contact with water surrounding the propulsion unit for exchanging thermal energy between liquid 16 circulating in the closed liquid circulation cooling system 24 and water surrounding the propulsion unit via the tube section 33 of the closed liquid circulation cooling system 24, as is the case in the eleventh embodiment of the propulsion unit shown in figures 36 to 69, and in the twelfth embodiment of the propulsion unit shown in figures 70 to 73. The tube section 33 may include a part in the form of a coiled tube.

If the closed liquid circulation cooling system 24 is partly formed by a tube section 33, the tube section 33 may be a part of a liquid-liquid-heat exchanger 38 that is in fluid communication with the closed liquid cooling system 15 so that liquid circulating in the inner space of the closed liquid cooling system 15 circulates through the tube section 33 of the liquid-liquid-heat exchanger 38 for exchanging thermal energy between liquid flowing through the tube section 33 of the liquid-liquid-heat exchanger 38 and water in contact with the tube section 33 of the liquid-liquid-heat exchanger 38 and surrounding the shell structure 1 of the propulsion unit.

The inner space of such closed liquid circulation cooling system 24 may be partly limited by the support section 26 of the shell structure 1 of the propulsion unit so that liquid 16 flowing in the inner space of the closed liquid circulation cooling system 24 is in direct contact with the support section 26 of the shell structure 1 for exchanging thermal energy between liquid 16 flowing in the inner space of the closed liquid circulation cooling system 24 and water surrounding the support section 26 of the shell structure 1 via the support section 26 of the shell structure 1.

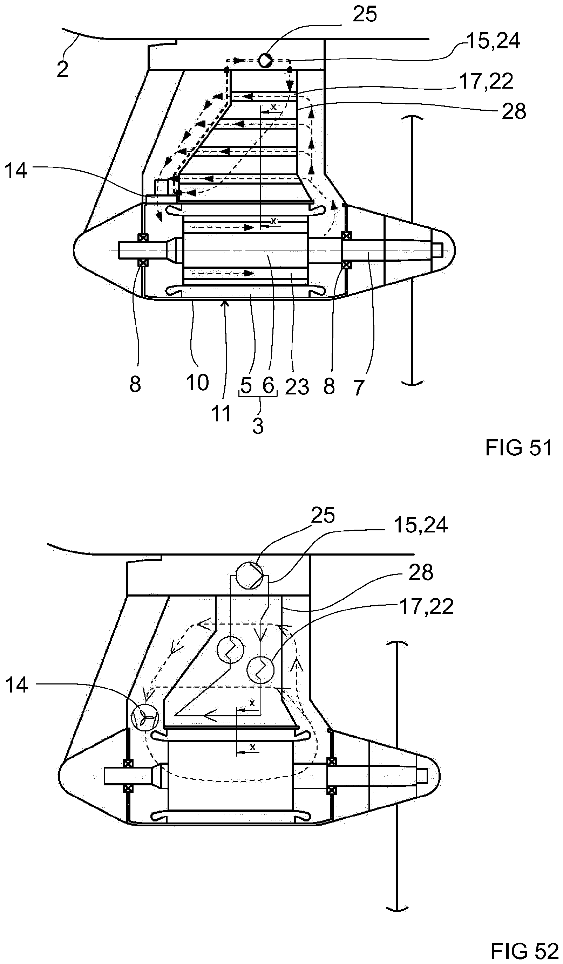

The inner space of such closed liquid circulation cooling system 24 may additionally be partly limited by a part 31 of the cylindrical outer surface 11 of the cylindrical section 10 of the motor housing section 9 so that liquid 16 flowing in the inner space of the closed liquid circulation cooling system 24 is in direct contact with said part 31 of the cylindrical outer surface 11 of the cylindrical section 10 of the motor housing section 9 for exchanging thermal energy between the electric motor 3 arranged in the cylindrical section 10 of the motor housing section 9 and liquid 16 flowing in the inner space of the closed liquid circulation cooling system 24 via said part 31 of the cylindrical section 10 of the motor housing section 9 between the electric motor 3 and liquid 16 circulating in the inner space of the closed liquid circulation cooling system 24, as is the case in the fourth embodiment of the propulsion unit shown in figures 22 to 28, in the fifth embodiment of the propulsion unit shown in figures 29 to 35, in the sixth embodiment of the propulsion unit shown in figures 36 to 42, in the seventh embodiment of the propulsion unit shown in figures 43 to 50, and in the eight embodiment of the propulsion unit shown in figures 51 to 56.

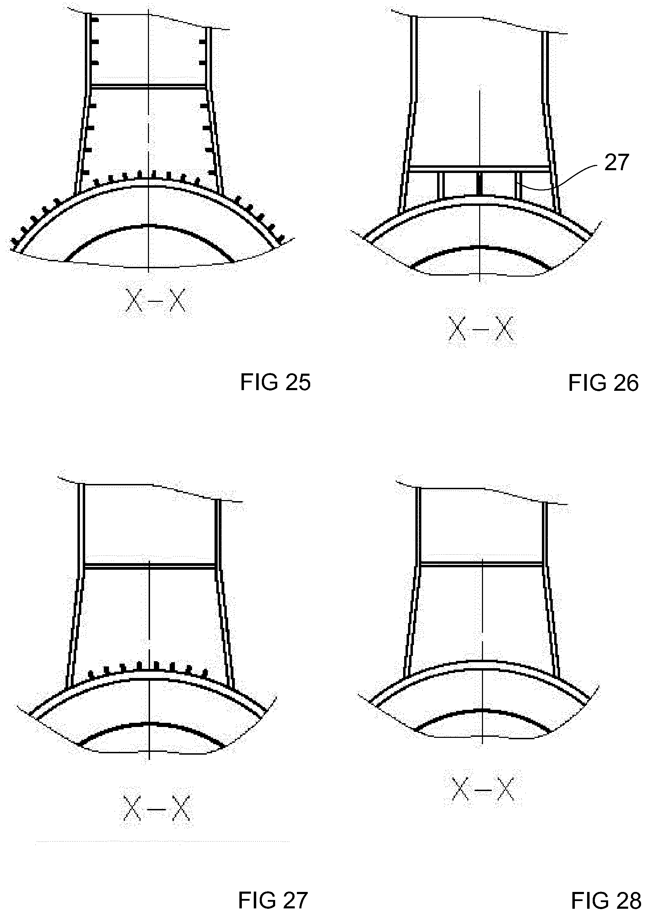

Said part 31 of the cylindrical outer surface 11 of the cylindrical section 10 of the motor housing section 9 in contact with liquid 16 in the inner space of the closed liquid circulation cooling system 24 may be provided with partition elements 27 for creating several individual flows of liquid 16 along said part 31 of the cylindrical outer surface 11 of the cylindrical section 10 of the motor housing section 9, as is shown in figures 26, 33, 40, and 47.

Said part 31 of the cylindrical section 10 of the cylindrical outer surface 11 of the motor housing section 9 in contact with liquid 16 in the closed liquid cooling system 15 may be provided with projecting heat-exchanging elements for enhancing transfer of thermal energy between the electric motor 3 in the motor housing section 9 and liquid 16 in the closed liquid cooling system 15, as is shown in figures 25, 32, 39, and 46.

If the closed liquid cooling system 15 is in the form of a closed liquid circulation cooling system 24, the closed liquid circulation cooling system 24 may be provided with a first liquid tank 28, having a first inner space (not marked with a reference numeral) that forms a part 31 of the inner space of the closed liquid circulation cooling system 24, as is the case in the fifth embodiment of the propulsion unit shown in figures 29 to 35, in the sixth embodiment of the propulsion unit shown in figures 36 to 42, and in the eight embodiment of the propulsion unit shown in figures 51 to 56.

Such first liquid tank 28 is in fluid communication with the closed liquid circulation cooling system 24 such that liquid 16 flowing in the closed liquid circulation cooling system 24 flows through the first inner space of the first liquid tank 28. The first inner space of the first liquid tank 28 is partly limited by said part 31 of the cylindrical outer surface 11 of the cylindrical section 10 of the motor housing section 9 so that liquid 16 in a first inner space of the first liquid tank 28 is in direct contact with the cylindrical outer surface 11 of the cylindrical section 10 of the motor housing section 9 for exchanging thermal energy between the electric motor 3 arranged in the motor housing section 9 and liquid 16 flowing in the first inner space of the first liquid tank 28 via said part 31 of the cylindrical outer surface 11 of the cylindrical section 10 of the motor housing section 9.

If the closed liquid circulation cooling system 24 is provided with a first liquid tank 28, the first liquid tank 28 may be additionally partly limited by the support section 26 of the shell structure 1 so that liquid 16 in the first inner space of the first liquid tank 28 is additionally in direct contact with the support section 26 of the shell structure 1 for exchanging thermal energy between liquid 16 flowing in the first inner space of the first liquid tank 28 of the closed liquid circulation cooling system 24 and water surrounding the support section 26 of the shell structure 1 via the support section 26 of the shell structure 1, as is the case in the fifth embodiment of the propulsion unit shown in figures 29 to 35, in the sixth embodiment of the propulsion unit shown in figures 36 to 42, and in the eight embodiment of the propulsion unit shown in figures 51 to 56.

If the closed liquid circulation cooling system 24 is provided with a first liquid tank 28, the first liquid tank 28 being provided with baffles 29 for guiding liquid 16 through the first liquid tank 28 to prolong the residence time of liquid 16 in the first liquid tank 28 and/or for serving as heat exchanging elements between liquid 16 flowing through the first liquid tank 28 and the support section 26 of the shell structure 1, as is the case in the fifth embodiment of the propulsion unit shown in figures 29 to 35, and in the sixth embodiment of the propulsion unit shown in figures 36 to 42.

If the closed liquid circulation cooling system 24 is provided with a first liquid tank 28, the gas-liquid-heat exchanger 17 can be formed by ducts 22 in fluid communication with the closed gas circulation cooling system 12, wherein the ducts 22 extends through the first liquid tank 28 for leading gas 13 circulating in the closed gas circulation cooling system 12 in said ducts 22 through the first liquid tank 28 and for exchanging thermal energy between gas 13 flowing in said ducts 22 through the first liquid tank 28 and liquid 16 in the first liquid tank 28, as in the eight embodiment of the propulsion unit shown in figures 51 to 56.

If the closed liquid cooling system 15 is in the form of a closed liquid circulation cooling system 24, the closed liquid circulation cooling system 24 may be provided with a second liquid tank 30 having a second inner space (not marked with a reference numeral) that forms a part of the inner space of the closed liquid circulation cooling system 24, as is the case in the first embodiment of the propulsion unit shown in figures 1 to 13, in the fifth embodiment of the propulsion unit shown in figures 29 to 35, and in the seventh embodiment of the propulsion unit shown in figures 43 to 50.

Such second liquid tank 30 is in fluid communication with the closed liquid circulation cooling system 24 such that liquid 16 flowing in the closed liquid circulation cooling system 24 flows through the second inner space of the second liquid tank 30. The second liquid tank 30 being partly limited by the support section 26 of the shell structure 1 so that liquid 16 in the second inner space (not marked with a reference numeral) of the second liquid tank 30 is in direct contact with the support section 26 of the shell structure 1 for exchanging thermal energy between liquid 16 flowing in the second inner space of the second liquid tank 30 and water surrounding the support section 26 of the shell structure 1 via the support section 26 of the shell structure 1.

If the closed liquid circulation cooling system 24 is provided with a second liquid tank 30, the second inner space of the second liquid tank 30 may be provided with baffles 29 for guiding liquid 16 through the second inner space of the second liquid tank 30 to prolong the residence time of liquid 16 in the second inner space of the second liquid tank 30 and/or for serving as heat exchanging elements between liquid 16 flowing through the second inner space of the second liquid tank 30 and the support section 26 of the shell structure 1, as is the case in the fifth embodiment of the propulsion unit shown in figures 29 to 35, and in the seventh embodiment of the propulsion unit shown in figures 43 to 50.

If the closed liquid circulation cooling system 24 is provided with a second liquid tank 30, the gas-liquid-heat exchanger 17 can be formed by ducts 22 in fluid communication with the closed gas circulation cooling system 12, wherein the ducts 22 extends through the second liquid tank 30 for leading gas 13 circulating in the closed gas circulation cooling system 12 in said ducts 22 through the second liquid tank 30 and for exchanging thermal energy between gas 13 flowing in said ducts 22 through the second liquid tank 30 and liquid 16 in the second liquid tank 30 as in the second embodiment of the propulsion unit shown in figures 14 to 17.

In the propulsion unit the lower end of the support section 26 of the shell structure 1 may be connected to the motor housing section 9 of the shell structure 1 so that the cylindrical outer surface 11 of the cylindrical section 10 of the motor housing section 9 of the shell structure 1 of the propulsion unit partly forms the outermost surface of the propulsion unit, as is shown in the figures. In such case the part 31 of the cylindrical outer surface 11 of the cylindrical section 10 of the motor housing section 9 forming the outermost surface of the propulsion unit may be provided with projecting heat-exchanging elements 20 for enhancing transfer of thermal energy between the electric motor 3 in the motor housing section 9 and water surrounding the part 31 of the cylindrical outer surface 11 of the cylindrical section 10 of the motor housing section 9 forming the outermost surface of the propulsion unit.

The gas-liquid-heat exchanger 17 can be a separate heat exchanger in fluid connection with the closed gas circulation cooling system 12 and in fluid connection with the closed liquid cooling system 15 as is the case in the first embodiment of the propulsion unit shown in figures 1 to 13, in the fourth embodiment of the propulsion unit shown in figures 22 to 28, in the fifth embodiment of the propulsion unit shown in figures 29 to 35, in the sixth embodiment of the propulsion unit shown in figures 36 to 42, and in the seventh embodiment of the propulsion unit shown in figures 43 to 50.

The cylindrical section 10 of the motor housing section 9 is preferably, but not necessarily, of a single-layer construction, as is illustrated in the figures. It is however obvious for a person skilled in the art that the cylindrical outer surface 11 of the cylindrical section 10 of the motor housing section 9 can for example additionally be painted.

The closed liquid cooling system 15 is arranged fully enclosed by the shell structure 1 of the propulsion unit, as is illustrated in the figures.

The closed gas circulation cooling system 12 is arranged fully enclosed by the shell structure 1 of the propulsion unit, as is illustrated in the figures.

The gas-liquid-heat exchanger 17 is preferably, but not necessarily, arranged at least partly enclosed by the shell structure 1 of the propulsion unit. The gas-liquid-heat exchanger 17 is arranged fully enclosed by the shell structure 1 of the propulsion unit, as is illustrated in the figures.

The closed liquid cooling system 15 is arranged fully outside the hull of the ship, as is illustrated in the figures.

The closed gas circulation cooling system 12 is arranged fully outside the hull of the ship, as is illustrated in the figures.

The gas-liquid-heat exchanger 17 is arranged fully outside the hull of the ship, as is illustrated in the figures.

The electric motor 3 is preferably, but not necessarily, an induction electric motor 3.

It is apparent to a person skilled in the art that as technology advances, the basic idea of the invention can be implemented in various ways. The invention and its embodiments are therefore not restricted to the above examples, but they may vary within the scope of the claims.

## Claims

1. A ship's propulsion unit such as a ship's azimuthing propulsion unit, wherein the propulsion unit comprising
a shell structure (1) arranged below a hull (2) of the ship and immersible at least partly in water so that the shell structure (1) is at least partly surrounded by water, and
an electric motor (3) for rotating a propeller (4) outside the shell structure (1),
wherein the electric motor (3) having a stator (5) and a rotor (6) for rotating in the stator (5),
wherein the electric motor (3) is arranged in a motor housing section (9) of the shell structure (1) so that the stator (5) of the electric motor (3) is form-fitted into a cylindrical section (10) of the motor housing section (9) of the shell structure (1),
wherein the cylindrical section (10) having a cylindrical outer surface (11), and
wherein the shell structure (1) includes a support section (26) having an lower end connected to the motor housing section (9) of the shell structure (1) and an upper end connected to the hull (2) of the ship, further defined by a closed gas circulation cooling system (12) containing gas (13) and comprising gas circulation means (14) for circulating gas (13) through channels (23) in the electric motor (3),
by a closed liquid cooling system (15) having an inner space containing liquid (16),
by a gas-liquid-heat exchanger (17) in fluid connection with the closed gas circulation cooling system (12) and in fluid connection with the closed liquid cooling system (15) for exchanging thermal energy between gas (13) circulating in the closed gas circulation cooling system (12) and liquid (16) in the closed liquid cooling system (15),
by the closed gas circulation cooling system (12), the closed liquid cooling system (15), and the gas-liquid-heat exchanger (17) being parts of the propulsion unit,
by the closed liquid cooling system (15) being arranged fully outside the hull (2) of the ship,
by the closed gas circulation cooling system (12) being arranged fully outside the hull (2) of the ship,
by the gas-liquid-heat exchanger (17) being arranged fully outside the hull (2) of the ship,
by the closed liquid cooling system (15) being in the form of a closed liquid circulation cooling system (24) containing liquid (16) and forming said inner space containing liquid (16) and provided with liquid circulation means (25) for circulating liquid (16) in the inner space of the closed liquid circulation cooling system (24),
by the inner space of the closed liquid circulation cooling system (24) being partly limited by a part (31) of the cylindrical outer surface (11) of the cylindrical section (10) of the motor housing section (9) so that liquid (16) flowing in the inner space of the closed liquid circulation cooling system (24) is in direct contact with said part (31) of the cylindrical outer surface (11) of the cylindrical section (10) of the motor housing section (9) for exchanging thermal energy between the electric motor (3) arranged in the cylindrical section (10) of the motor housing section (9) and liquid (16) flowing in the inner space of the closed liquid circulation cooling system (24) via said part (31) of the cylindrical section (10) of the motor housing section (9) between the electric motor (3) and liquid (16) circulating in the inner space of the closed liquid circulation cooling system (24), and
by the lower end of the support section (26) of the shell structure (1) being connected to the motor housing section (9) of the shell structure (1) so that the cylindrical outer surface (11) of the cylindrical section (10) of the motor housing section (9) of the shell structure (1) of the propulsion unit partly forms the outermost surface of the propulsion unit.

2. The propulsion unit according to claim 1, **characterized**
**by** the inner space of the closed liquid cooling system (15) being partly limited by the shell structure (1) of the propulsion unit so that liquid (16) in the inner space of the closed liquid cooling system (15) being in direct contact with the shell structure (1) of the propulsion unit for exchanging thermal energy between liquid (16) in the closed liquid cooling system (15) and water surrounding the propulsion unit via the shell structure (1) of the propulsion unit

3. The propulsion unit according to claim 1 or 2, **characterized**
**by** the lower end of the support section (26) of the shell structure (1) being connected to the motor housing section (9) of the shell structure (1) so that an opening (18) is formed in the support section (26) of the shell structure (1).

4. The propulsion unit according to claim 3, **characterized**
**by** the lower end of the support section (26) of the shell structure (1) being connected to the motor housing section (9) of the shell structure (1) so that the opening (18) in the support section (26) of the shell structure (1) is formed between the support section (26) of the shell structure (1) and the motor housing section (9) of the shell structure (1) and so that a cylindrical part (19) of the cylindrical outer surface (11) of the cylindrical section (10) of the motor housing section (9) forms a part of an outermost surface of the propulsion unit.

5. The propulsion unit according to any of the claims 1-4, **characterized**
**by** the closed liquid circulation cooling system (24) being partly formed by a tube section (33) having an outer surface (34) that is in direct contact with water surrounding the propulsion unit for exchanging thermal energy between liquid (16) circulating in the closed liquid circulation cooling system (24) and water surrounding the propulsion unit via the tube section (33) of the closed liquid circulation cooling system (24).

6. The propulsion unit according to claim 5, **characterized by** the tube section (33) being a part of a liquid-liquid-heat exchanger (38) that is in fluid communication with the closed liquid cooling system (15) so that liquid circulating in the inner space of the closed liquid cooling system (15) circulates through the tube section (33) of the liquid-liquid-heat exchanger (38) for exchanging thermal energy between liquid flowing through the tube section (33) of the liquid-liquid-heat exchanger (38) and water in contact with the tube section (33) of the liquid-liquid-heat exchanger (38) and surrounding the shell structure (1) of the propulsion unit.

7. The propulsion unit according to any of the claims 1 to 6, **characterized**
**by** the inner space of the closed liquid circulation cooling system (24) being partly limited by the support section (26) of the shell structure (1) of the propulsion unit so that liquid (16) flowing in the inner space of the closed liquid circulation cooling system (24) is in direct contact with the support section (26) of the shell structure (1) for exchanging thermal energy between liquid (16) flowing in the inner space of the closed liquid circulation cooling system (24) and water surrounding the support section (26) of the shell structure (1) via the support section (26) of the shell structure (1).

8. The propulsion unit according to any of the claims 1 to 7, **characterized by** said part (31) of the cylindrical outer surface (11) of the cylindrical section (10) of the motor housing section (9) in contact with liquid (16) in the inner space of the closed liquid circulation cooling system (24) being provided with partition elements (27) for creating several individual flows of liquid (16) along said part (31) of the cylindrical outer surface (11) of the cylindrical section (10) of the motor housing section (9).

9. The propulsion unit according to any of the claims 1 to 8, **characterized by** the closed liquid circulation cooling system (24) is provided with a first liquid tank (28),
by the first liquid tank (28) having a first inner space that forms a part of the inner space of the closed liquid circulation cooling system (24),
by the first liquid tank (28) being in fluid communication with the closed liquid circulation cooling system (24) such that liquid (16) flowing in the closed liquid circulation cooling system (24) flows through the first inner space of the first liquid tank (28), and
by the first inner space of the first liquid tank (28) being partly limited by said part (31) of the cylindrical outer surface (11) of the cylindrical section (10) of the motor housing section (9) so that liquid (16) in a first inner space of the first liquid tank (28) is in direct contact with the cylindrical outer surface (11) of the cylindrical section (10) of the motor housing section (9) for exchanging thermal energy between the electric motor (3) arranged in the motor housing section (9) and liquid (16) flowing in the first inner space of the first liquid tank (28) via said part (31) of the cylindrical outer surface (11) of the cylindrical section (10) of the motor housing section (9).

10. The propulsion unit according to claim 9, **characterized by** the first liquid tank (28) being additionally partly limited by the support section (26) of the shell structure (1) so that liquid (16) in the first inner space of the first liquid tank (28) is additionally in direct contact with the support section (26) of the shell structure (1) for exchanging thermal energy between liquid (16) flowing in the first inner space of the first liquid tank (28) of the closed liquid circulation cooling system (24) and water surrounding the support section (26) of the shell structure (1) via the support section (26) of the shell structure (1).

11. The propulsion unit according to any of the claims 1 to 10, **characterized by** the closed liquid circulation cooling system (24) being provided with a second liquid tank (30),
by the second liquid tank (30) having a second inner space that forms a part of the inner space of the closed liquid circulation cooling system (24),
by the second liquid tank (30) being in fluid communication with the closed liquid circulation cooling system (24) such that liquid (16) flowing in the closed liquid circulation cooling system (24) flows through the second inner space of the second liquid tank (30), and
by the second liquid tank (30) being partly limited by the support section (26) of the shell structure (1) so that liquid (16) in the second inner space of the second liquid tank (30) is in direct contact with the support section (26) of the shell structure (1) for exchanging thermal energy between liquid (16) flowing in the second inner space of the second liquid tank (30) and water surrounding the support section (26) of the shell structure (1) **via** the support section (26) of the shell structure (1).

12. The propulsion unit according to any of the claims 1 to 11, **characterized by** the gas-liquid-heat exchanger (17) being a separate heat exchanger in fluid connection with the closed gas circulation cooling system (12) and in fluid connection with the closed liquid cooling system (15).

13. The propulsion unit according to any of the claims 1 to 12, **characterized by** the cylindrical section (10) of the motor housing section (9) being of a single-layer construction.

14. The propulsion unit according to any of the claims 1 to 13, **characterized by** the closed liquid cooling system (15) being arranged fully enclosed by the shell structure (1) of the propulsion unit,
by the closed gas circulation cooling system (12) being arranged fully enclosed by the shell structure (1) of the propulsion unit, and
by the gas-liquid-heat exchanger (17) being arranged fully enclosed by the shell structure (1) of the propulsion unit.

## Patentansprüche

1. Antriebseinheit eines Schiffes wie eine Azimut-Antriebseinheit eines Schiffes, wobei die Antriebseinheit umfasst:
eine Schalenstruktur (1), die unterhalb eines Rumpfes (2) des Schiffes angeordnet ist und wenigstens teilweise in Wasser versenkbar ist, so dass die Schalenstruktur (1) wenigstens teilweise von Wasser umgeben ist, und
einen Elektromotor (3) zum Drehen eines Propellers (4) außerhalb der Schalenstruktur (1),
wobei der Elektromotor (3) einen Stator (5) und einen Rotor (6) zum Rotieren im Stator (5) aufweist,
wobei der Elektromotor (3) in einem Motorgehäuseabschnitt (9) der Schalenstruktur (1) angeordnet ist, so dass der Stator (5) des Elektromotors (3) formschlüssig in einen zylindrischen Abschnitt (10) des Motorgehäuseabschnitts (9) der Schalenstruktur (1) eingebaut ist,
wobei der zylindrische Abschnitt (10) eine zylindrische äußere Fläche (11) aufweist, und
wobei die Schalenstruktur (1) einen Stützabschnitt (26) aufweist, der ein unteres Ende, das mit dem Motorgehäuseabschnitt (9) der Schalenstruktur (1) verbunden ist, und ein oberes Ende, das mit dem Rumpf (2) des Schiffes verbunden ist, aufweist,
ferner definiert
durch ein geschlossenes Gasumlaufkühlsystem (12), das Gas (13) enthält und Gasumwälzmittel (14) aufweist, um Gas (13) durch Kanäle (23) im Elektromotor (3) umzuwälzen,
durch ein geschlossenes Flüssigkeitskühlsystem (15), das einen Innenraum aufweist, der Flüssigkeit (16) enthält,
durch einen Gas/Flüssigkeit-Wärmetauscher (17) in strömungstechnischer Verbindung mit dem geschlossenen Gasumlaufkühlsystem (12) und in strömungstechnischer Verbindung mit dem geschlossenen Flüssigkeitskühlsystem (15) zum Austausch von thermischer Energie zwischen dem im geschlossenen Gasumlaufkühlsystem (12) zirkulierenden Gas (13) und der Flüssigkeit (16) im geschlossenen Flüssigkeitskühlsystem (15),
dadurch, dass das geschlossene Gasumlaufkühlsystem (12), das geschlossene Flüssigkeitskühlsystem (15) und der Gas/Flüssigkeit-Wärmetauscher (17) Teile der Antriebseinheit sind,
dadurch, dass das geschlossene Flüssigkeitskühlsystem (15) komplett außerhalb des Rumpfes (2) des Schiffs angeordnet ist,
dadurch, dass das geschlossene Gasumlaufkühlsystem (12) komplett außerhalb des Rumpfes (2) des Schiffs angeordnet ist,
dadurch, dass der Gas/Flüssigkeit-Wärmetauscher (17) komplett außerhalb des Rumpfes (2) des Schiffs angeordnet ist,
dadurch, dass das geschlossene Flüssigkeitskühlsystem (15) die Form eines geschlossenen Flüssigkeitsumlaufkühlsystems (24) hat und den Flüssigkeit (16) enthaltenden Innenraum ausbildet und mit Flüssigkeitsumwälzmitteln (25) für das Umwälzen von Flüssigkeit (16) im Innenraum des geschlossenen Flüssigkeitsumlaufkühlsystems (24) versehen ist,
dadurch, dass der Innenraum des geschlossenen Flüssigkeitsumlaufkühlsystems (24) teilweise durch einen Teil (31) der zylindrischen äußeren Fläche (11) des zylindrischen Abschnitts (7) des Motorgehäuseabschnitts (9) begrenzt ist, so dass Flüssigkeit, die im Innenraum des geschlossenen Flüssigkeitsumlaufkühlsystems (24) strömt, mit diesem Teil (31) der zylindrischen äußeren Fläche (11) des zylindrischen Abschnitts (10) des Motorgehäuseabschnitts (9) in direktem Kontakt ist, um thermische Energie zwischen dem Elektromotor (3), der im zylindrischen Abschnitt (10) des Motorgehäuseabschnitts (9) angeordnet ist, und der im Innenraum des geschlossenen Flüssigkeitsumlaufkühlsystems (24) strömenden Flüssigkeit über diesen Teil (31) des zylindrischen Abschnitts (10) des Motorgehäuseabschnitts (9) zwischen dem Elektromotor (3) und der im Innenraum des geschlossenen Flüssigkeitsumlaufkühlsystems (24) strömenden Flüssigkeit (16) auszutauschen, und
dadurch, dass das untere Ende des Stützabschnitts (26) der Schalenstruktur (1) mit dem Motorgehäuseabschnitt (9) der Schalenstruktur (1) verbunden ist, so dass die zylindrische äußere Fläche (11) des zylindrischen Abschnitts (10) des Motorgehäuseabschnitts (9) der Schalenstruktur (1) der Antriebseinheit teilweise die Außenfläche der Antriebseinheit bildet.

2. Antriebseinheit nach Anspruch 1, **gekennzeichnet dadurch,**
**dass** der Innenraum des geschlossenen Flüssigkeitskühlsystems (15) teilweise durch die Schalenstruktur (1) der Antriebseinheit begrenzt ist, so dass Flüssigkeit (16) im Innenraum des geschlossenen Flüssigkeitskühlsystems (15) mit der Schalenstruktur (1) der Antriebseinheit in direktem Kontakt ist, um thermische Energie zwischen Flüssigkeit (16) im geschlossenen Flüssigkeitskühlsystem (15) und Wasser, das die Antriebseinheit umgibt, über die Schalenstruktur (1) der Antriebseinheit auszutauschen.

3. Antriebseinheit nach Anspruch 1 oder 2, **gekennzeichnet dadurch,**
**dass** das untere Ende des Stützabschnitts (26) der Schalenstruktur (1) mit dem Motorgehäuseabschnitt (9) der Schalenstruktur (1) verbunden ist, so dass eine Öffnung (18) im Stützabschnitt (26) der Schalenstruktur (1) ausgebildet wird.

4. Antriebseinheit nach Anspruch 3, **gekennzeichnet dadurch,**
**dass** das untere Ende des Stützabschnitts (26) der Schalenstruktur (1) mit dem Motorgehäuseabschnitt (9) der Schalenstruktur (1) verbunden ist, so dass die Öffnung (18) im Stützabschnitt (26) der Schalenstruktur (1) zwischen dem Stützabschnitt (26) der Schalenstruktur (1) und dem Motorgehäuseabschnitt (9) der Schalenstruktur (1) ausgebildet ist und so dass ein zylindrischer Teil (19) der zylindrischen äußeren Fläche (11) des zylindrischen Abschnitts (10) des Motorgehäuseabschnitts (9) einen Teil einer Außenfläche der Antriebseinheit bildet.

5. Antriebseinheit nach einem der Ansprüche 1 bis 4, **gekennzeichnet dadurch,**
**dass** das geschlossene Flüssigkeitsumlaufkühlsystem (24) teilweise durch einen Rohrabschnitt (33) gebildet wird, der eine äußere Fläche (34) aufweist, die mit Wasser, das die Antriebseinheit umgibt, in direktem Kontakt ist, um über den Rohrabschnitt (33) des geschlossen Flüssigkeitsumlaufkühlsystems (24) thermische Energie zwischen Flüssigkeit (16), die im geschlossenen Flüssigkeitsumlaufkühlsystem (24) zirkuliert, und Wasser, das die Antriebseinheit umgibt, auszutauschen.

6. Antriebseinheit nach Anspruch 5, **gekennzeichnet dadurch,**
**dass** der Rohrabschnitt (33) ein Teil eines Flüssigkeit/Flüssigkeit-Wärmetauschers (38) ist, der mit dem geschlossenen Flüssigkeitskühlsystem (15) in strömungstechnischer Verbindung steht, so dass Flüssigkeit, die im Innenraum des geschlossenen Flüssigkeitskühlsystems (15) zirkuliert, durch den Rohrabschnitt (33) des Flüssigkeit/Flüssigkeit-Wärmetauschers (38) zirkuliert, um thermische Energie zwischen Flüssigkeit, die durch den Rohrabschnitt (33) des Flüssigkeit/Flüssigkeit-Wärmetauschers (38) strömt, und Wasser, das mit dem Rohrabschnitt (33) des Flüssigkeit/Flüssigkeit-Wärmetauschers (38) in Kontakt steht und die Schalenstruktur (1) der Antriebseinheit umgibt, auszutauschen.

7. Antriebseinheit nach einem der Ansprüche 1 bis 6, **gekennzeichnet dadurch,**
**dass** der Innenraum des geschlossenen Flüssigkeitsumlaufkühlsystems (24) teilweise durch den Stützabschnitt (26) der Schalenstruktur (1) der Antriebseinheit begrenzt ist, so dass Flüssigkeit (16), die im Innenraum des geschlossenen Flüssigkeitsumlaufkühlsystems (24) strömt, mit dem Stützabschnitt (26) der Schalenstruktur (1) in direktem Kontakt ist, um über den Stützabschnitt (26) der Schalenstruktur (1) thermische Energie zwischen Flüssigkeit, die im Innenraum des geschlossenen Flüssigkeitsumlaufkühlsystems (24) strömt, und Wasser, das den Stützabschnitt (26) der Schalenstruktur (1) umgibt, auszutauschen.

8. Antriebseinheit nach einem der Ansprüche 1 bis 7, **gekennzeichnet dadurch,**
**dass** der Teil (31) der zylindrischen äußeren Fläche (11) des zylindrischen Abschnitts (10) des Motorgehäuseabschnitts (9), der mit Flüssigkeit (16) im Innenraum des geschlossenen Flüssigkeitsumlaufkühlsystems (24) in Kontakt ist, mit Trennelementen (27) versehen ist, um mehrere Einzelströme von Flüssigkeit (16) an diesem Teil (31) der zylindrischen äußeren Fläche (11) des zylindrischen Abschnitts (10) des Motorgehäuseabschnitts (9) entlang zu erzeugen.

9. Antriebseinheit nach einem der Ansprüche 1 bis 8, **gekennzeichnet dadurch,**
**dass** das geschlossene Flüssigkeitsumlaufkühlsystem (24) mit einem ersten Flüssigkeitsbehälter (28) versehen ist,
**dass** der erste Flüssigkeitsbehälter (28) einen ersten Innenraum aufweist, der einen Teil des Innenraums des geschlossenen Flüssigkeitsumlaufkühlsystems (24) bildet,
**dass** der erste Flüssigkeitsbehälter (28) mit dem geschlossenen Flüssigkeitsumlaufkühlsystem (24) strömungstechnisch verbunden ist, so dass Flüssigkeit (16), die im geschlossenen Flüssigkeitsumlaufkühlsystem (24) strömt, durch den ersten Innenraum des ersten Flüssigkeitsbehälters (28) strömt, und
**dass** der erste Innenraum des ersten Flüssigkeitsbehälters (28) teilweise durch den Teil (31) der zylindrischen äußeren Fläche (11) des zylindrischen Abschnitts (10) des Motorgehäuseabschnitts (9) begrenzt ist, so dass Flüssigkeit (16) in einem ersten Innenraum des ersten Flüssigkeitsbehälters (28) mit der zylindrischen äußeren Fläche (11) des zylindrischen Abschnitts (10) des Motorgehäuseabschnitts (9) in direktem Kontakt ist, um über diesen Teil (31) der zylindrischen äußeren Fläche (11) des zylindrischen Abschnitts (10) des Motorgehäuseabschnitts (9) thermische Energie zwischen dem Elektromotor (3), der im Motorgehäuseabschnitt (9) angeordnet ist, und Flüssigkeit (16), die im ersten Innenraum des ersten Flüssigkeitsbehälters (28) strömt, auszutauschen.

10. Antriebseinheit nach Anspruch 9, **gekennzeichnet dadurch,**
**dass** der erste Flüssigkeitsbehälter (28) zusätzlich teilweise durch den Stützabschnitt (26) der Schalenstruktur (1) begrenzt ist, so dass Flüssigkeit (16) im ersten Innenraum des ersten Flüssigkeitsbehälters (28) zusätzlich mit dem Stützabschnitt (26) der Schalenstruktur (1) in direktem Kontakt ist, um über den Stützabschnitt (26) der Schalenstruktur (1) thermische Energie zwischen Flüssigkeit (16), die im ersten Innenraum des ersten Flüssigkeitsbehälters (28) des geschlossenen Flüssigkeitsumlaufkühlsystems (24) strömt, und Wasser, das den Stützabschnitt (26) der Schalenstruktur (1) umgibt, auszutauschen.

11. Antriebseinheit nach einem der Ansprüche 1 bis 10, **gekennzeichnet dadurch,**
**dass** das geschlossene Flüssigkeitsumlaufkühlsystem (24) mit einem zweiten Flüssigkeitsbehälter (30) versehen ist,
**dass** der zweite Flüssigkeitsbehälter (30) einen zweiten Innenraum aufweist, der einen Teil des Innenraums des geschlossenen Flüssigkeitsumlaufkühlsystems (24) bildet,
**dass** der zweite Flüssigkeitsbehälter (30) mit dem geschlossenen Flüssigkeitsumlaufkühlsystem (24) strömungstechnisch verbunden ist, so dass Flüssigkeit (16), die im geschlossenen Flüssigkeitsumlaufkühlsystem (24) strömt, durch den zweiten Innenraum des zweiten Flüssigkeitsbehälters (30) strömt, und
**dass** der zweite Flüssigkeitsbehälter (30) teilweise durch den Stützabschnitt (26) der Schalenstruktur (1) begrenzt ist, so dass Flüssigkeit (16) im zweiten Innenraum des zweiten Flüssigkeitsbehälters (30) mit dem Stützabschnitt (26) der Schalenstruktur (1) in direktem Kontakt ist, um über den Stützabschnitt (26) der Schalenstruktur (1) thermische Energie zwischen Flüssigkeit (16), die im zweiten Innenraum des zweiten Flüssigkeitsbehälters (30) strömt, und Wasser, das den Stützabschnitt (26) der Schalenstruktur (1) umgibt, auszutauschen.

12. Antriebseinheit nach einem der Ansprüche 1 bis 11, **gekennzeichnet dadurch,**
**dass** der Gas/Flüssigkeit-Wärmetauscher (17) ein separater Wärmetauscher in strömungstechnischer Verbindung mit dem geschlossenen Gasumlaufkühlsystem (12) und in strömungstechnischer Verbindung mit dem geschlossenen Flüssigkeitsumlaufsystem (15) steht.

13. Antriebseinheit nach einem der Ansprüche 1 bis 12, **gekennzeichnet dadurch, dass** der zylindrische Abschnitt (10) des Motorgehäuseabschnitts (9) einen einschichtigen Aufbau aufweist.

14. Antriebseinheit nach einem der Ansprüche 1 bis 13, **gekennzeichnet dadurch,**
**dass** das geschlossene Flüssigkeitskühlsystem (15) so angeordnet ist, dass es von der Schalenstruktur (1) der Antriebseinheit komplett umschlossen wird,
**dass** das geschlossene Gasumlaufkühlsystem (12) so angeordnet ist, dass es von der Schalenstruktur (1) der Antriebseinheit komplett umschlossen wird, und
**dass** der Gas/Flüssigkeit-Wärmetauscher (17) so angeordnet ist, dass er von der Schalenstruktur (1) der Antriebseinheit komplett umschlossen wird.

## Revendications

1. Unité de propulsion d'un navire, telle qu'une unité de propulsion azimutale d'un navire, ladite unité de propulsion comprenant :
une structure d'enveloppe (1) disposée en dessous d'une coque (2) du navire et au moins partiellement submersible dans l'eau de manière que la structure d'enveloppe (1) soit au moins partiellement entourée d'eau, et
un moteur électrique (3) pour tourner une hélice (4) à l'extérieur de la structure d'enveloppe (1),
ledit moteur électrique (3) ayant un stator (5) et un rotor (6) pour la rotation dans le stator (5),
ledit moteur électrique (3) étant disposé dans un tronçon de carter de moteur (9) de la structure d'enveloppe (1) de manière que le stator (5) du moteur électrique (3) soit monté par correspondance forme dans une section cylindrique (9) du tronçon de carter de moteur (8) de la structure d'enveloppe (1),
ladite section cylindrique (10) ayant une surface extérieure cylindrique (11), et
ladite structure d'enveloppe (1) comprenant un tronçon de support (26) ayant une extrémité inférieure reliée au tronçon de carter de moteur (9) de la structure d'enveloppe (1) et une extrémité supérieure reliée à la coque (2) du navire,
également définie
par un système fermé de refroidissement par circulation de gaz (12) contenant du gaz (13) et comprenant des moyens de circulation de gaz (14) pour faire circuler du gaz (13) par des canaux (23) dans le moteur électrique (3),
par un système fermé de refroidissement par liquide (15) ayant un espace intérieur (10) contenant du liquide (16),
par un échangeur de chaleur gaz/liquide (17) en communication fluidique avec le système fermé de refroidissement par circulation de gaz (12) et en communication fluidique avec le système fermé de refroidissement par liquide (15) pour échanger de l'énergie thermique entre le gaz (13) circulant dans le système fermé de refroidissement par circulation de gaz (12) et le liquide (16) dans le système fermé de refroidissement par liquide (15),
en ce que le système fermé de refroidissement par circulation de gaz (12), le système fermé de refroidissement par liquide (15) et l'échangeur de chaleur gaz/liquide (17) font partie de l'unité de propulsion,
en ce que le système fermé de refroidissement par liquide (15) est disposé entièrement à l'extérieur de la coque (2) du navire,
en ce que le système fermé de refroidissement par circulation de gaz (12) est disposé entièrement à l'extérieur de la coque (2) du navire,
en ce que l'échangeur de chaleur gaz/liquide (17) est disposé entièrement à l'extérieur de la coque (2) du navire,
en ce que le système fermé de refroidissement par liquide (15) présente la forme d'un système fermé de refroidissement par circulation de liquide (24) contenant du liquide (16) et constituant ledit espace intérieur contenant du liquide (16) et est pourvu de moyens de circulation de liquide (25) pour faire circuler du liquide (16) dans l'espace intérieur du système fermé de refroidissement par circulation de liquide (24),
en ce que l'espace intérieur du système fermé de refroidissement par circulation de liquide (24) est partiellement limité par une partie (31) de la surface extérieure cylindrique (11) de la section cylindrique (7) du tronçon de carter de moteur (9) de sorte que le liquide (16) coulant dans l'espace intérieur du système fermé de refroidissement par circulation de liquide (24) soit en contact direct avec ladite partie (31) de la surface extérieure cylindrique (11) de la section cylindrique (10) du tronçon de carter de moteur (9) pour un échange d'énergie thermique entre le moteur électrique (3) disposé dans la section cylindrique (10) du tronçon de carter de moteur (9) et le liquide (16) coulant dans l'espace intérieur du système fermé de refroidissement par circulation de liquide (24) à travers de ladite partie (31) de la section cylindrique (10) du tronçon de carter de moteur (9) entre le moteur électrique (3) et le liquide (16) circulant dans l'espace intérieur du système fermé de refroidissement par circulation de liquide (24), et
en ce que l'extrémité inférieure du tronçon de support (26) de la structure d'enveloppe (1) est reliée au tronçon de carter de moteur (9) de la structure d'enveloppe (1) de sorte que la surface extérieure cylindrique (11) de la section cylindrique (10) du tronçon de carter de moteur (9) de la structure d'enveloppe (1) de l'unité de propulsion forme en partie la surface externe de l'unité de propulsion.

2. Unité de propulsion selon la revendication 1, **caractérisée en ce**
**que** l'espace intérieur du système fermé de refroidissement par liquide (15) est partiellement limité par la structure d'enveloppe (1) de l'unité de propulsion de sorte que le liquide (16) dans l'espace intérieur du système fermé de refroidissement par liquide (15) soit en contact direct avec la structure d'enveloppe (1) de l'unité de propulsion pour un échange d'énergie thermique, à travers de la structure d'enveloppe (1) de l'unité de propulsion, entre le liquide (16) dans le système fermé de refroidissement par liquide (15) et l'eau entourant l'unité de propulsion.

3. Unité de propulsion selon la revendication 1 ou 2, **caractérisée en ce**
**que** l'extrémité inférieure du tronçon de support (26) de la structure d'enveloppe (1) est reliée au tronçon de carter de moteur (9) de la structure d'enveloppe (1) de sorte qu'une ouverture (18) soit formée dans le du tronçon de support (9) de la structure d'enveloppe (1).

4. Unité de propulsion selon la revendication 3, **caractérisée en ce**
**que** l'extrémité inférieure du tronçon de support (26) de la structure d'enveloppe (1) est reliée au tronçon de carter de moteur (9) de la structure d'enveloppe (1) de sorte que l'ouverture (18) dans le tronçon de support (26) de la structure d'enveloppe (1) soit formée entre le tronçon de support (26) de la structure d'enveloppe (1) et le tronçon de carter de moteur (9) de la structure d'enveloppe (1) et de sorte qu'une partie cylindrique (19) de la surface extérieure cylindrique (11) de la section cylindrique (10) du tronçon de carter de moteur (9) forme une partie d'une surface externe de l'unité de propulsion.

5. Unité de propulsion selon l'une des revendications 1 à 4, **caractérisée en ce**
**que** le système fermé de refroidissement par circulation de liquide (24) est partiellement formé par une section tubulaire (33) qui comprend une surface extérieure (34) qui est en contact direct avec l'eau entourant l'unité de propulsion pour un échange d'énergie thermique, à travers de la section tubulaire (33) du système fermé de refroidissement par circulation de liquide (24), entre le liquide (16) circulant dans le système fermé de refroidissement par circulation de liquide (24) et l'eau entourant l'unité de propulsion.

6. Unité de propulsion selon la revendication 5, **caractérisée en ce**
**que** la section tubulaire (33) est une partie d'un échangeur de chaleur liquide/liquide (38) qui est en communication fluidique avec le système fermé de refroidissement par liquide (15) de sorte que le liquide circulant dans l'espace intérieur du système fermé de refroidissement par liquide (15) circule au travers de la section tubulaire (33) de l'échangeur de chaleur liquide/liquide (38) pour un échange d'énergie thermique entre le liquide coulant par la section tubulaire (33) de l'échangeur de chaleur liquide/liquide (38) et l'eau qui est en contact avec la section tubulaire (33) de l'échangeur de chaleur liquide/liquide (38) et qui entoure la structure d'enveloppe (1) de l'unité de propulsion.

7. Unité de propulsion selon l'une des revendications 1 à 6, **caractérisée en ce**
**que** l'espace intérieur du système fermé de refroidissement par circulation de liquide (24) est partiellement limité par le tronçon de support (26) de la structure d'enveloppe (1) de l'unité de propulsion de sorte que le liquide (16) coulant dans l'espace intérieur du système fermé de refroidissement par circulation de liquide (24) soit en contact direct avec le tronçon de support (26) de la structure d'enveloppe (1) pour un échange d'énergie thermique, à travers du tronçon de support (26) de la structure d'enveloppe (1), entre le liquide (16) coulant dans l'espace intérieur du système fermé de refroidissement par circulation de liquide (24) et l'eau entourant le tronçon de support (26) de la structure d'enveloppe (1).

8. Unité de propulsion selon l'une des revendications 1 à 7, **caractérisée en ce**
**que** la partie (31) de la surface extérieure cylindrique (11) de la section cylindrique (10) du tronçon de carter de moteur (9) en contact avec le liquide (16) dans l'espace intérieur du système fermé de refroidissement par circulation de liquide (24) est munie d'éléments de séparation (16) pour créer plusieurs flux individuels de liquide (16) le long de ladite partie (31) de la surface extérieure cylindrique (11) de la section cylindrique (10) du tronçon de carter de moteur (9).

9. Unité de propulsion selon l'une des revendications 1 à 8, **caractérisée en ce**
**que** le système fermé de refroidissement par circulation de liquide (24) est pourvu d'un premier réservoir de liquide (28),
**que** le premier réservoir de liquide (28) a un premier espace intérieur formant une partie de l'espace intérieur du système fermé de refroidissement par circulation de liquide (24),
**que** le premier réservoir de liquide (28) est en communication fluidique avec le système fermé de refroidissement par circulation de liquide (24) de sorte que le liquide (16) coulant dans le système fermé de refroidissement par circulation de liquide (24) coule au travers du premier espace intérieur du premier réservoir de liquide (28), et
**que** le premier espace intérieur du premier réservoir de liquide (28) est partiellement limité par ladite partie (31) de la surface extérieure cylindrique (11) de la section cylindrique (10) du tronçon de carter de moteur (9) de sorte que le liquide (16) dans un premier espace intérieur du premier réservoir de liquide (28) soit en contact direct avec la surface extérieure cylindrique (11) de la section cylindrique (10) du tronçon de carter de moteur (9) pour un échange d'énergie thermique, à travers de ladite partie (31) de la surface extérieure cylindrique (11) de la section cylindrique (11) du tronçon de carter de moteur (9), entre le moteur électrique (3) disposé dans le tronçon de carter de moteur (9) et le liquide (16) coulant dans le premier espace intérieur du premier réservoir de liquide (28).

10. Unité de propulsion selon la revendication 9, **caractérisée en ce**
**que** le premier réservoir de liquide (28) est, en outre, partiellement limité par le tronçon de support (26) de la structure d'enveloppe (1) de sorte que le liquide (16) dans le premier espace intérieur du premier réservoir de liquide (28) soit également en contact direct avec le tronçon de support (26) de la structure d'enveloppe (1) pour un échange d'énergie thermique, à travers du tronçon de support (26) de la structure d'enveloppe (1), entre le liquide (16) coulant dans le premier espace intérieur du premier réservoir de liquide (28) du système fermé de refroidissement par circulation de liquide (24) et l'eau entourant le tronçon de support (26) de la structure d'enveloppe (1).

11. Unité de propulsion selon l'une des revendications 1 à 10, **caractérisée en ce**
**que** le système fermé de refroidissement par circulation de liquide (24) est pourvu d'un deuxième réservoir de liquide (30),
**que** le deuxième réservoir de liquide (30) a un deuxième espace intérieur formant une partie de l'espace intérieur du système fermé de refroidissement par circulation de liquide (24),
**que** le deuxième réservoir de liquide (30) est en communication fluidique avec le système fermé de refroidissement par circulation de liquide (24) de sorte que le liquide (16) coulant dans le système fermé de refroidissement par circulation de liquide (24) coule au travers du deuxième espace intérieur du deuxième réservoir de liquide (30), et
**que** le deuxième réservoir de liquide (30) est partiellement limité par le tronçon de support (26) de la structure d'enveloppe (1) de manière que le liquide (16) dans le deuxième espace intérieur du deuxième réservoir de liquide (30) soit en contact direct avec le tronçon de support (26) de la structure d'enveloppe (1) pour un échange d'énergie thermique, à travers du tronçon de support (26) de la structure d'enveloppe (1), entre le liquide (16) coulant dans le deuxième espace intérieur du deuxième réservoir de liquide (30) et l'eau entourant le tronçon de support (26) de la structure d'enveloppe (1).

12. Unité de propulsion selon l'une des revendications 1 à 11, **caractérisée en ce**
**que** l'échangeur de chaleur gaz/liquide (17) est un échangeur de chaleur séparé en communication fluidique avec le système fermé de refroidissement par circulation de gaz (12) et en communication fluidique avec le système fermé de refroidissement par circulation de liquide (15).

13. Unité de propulsion selon l'une des revendications 1 à 12, **caractérisée en ce que** la section cylindrique (10) du tronçon de carter de moteur (9) est d'une structure monocouche.

14. Unité de propulsion selon l'une des revendications 1 à 13, **caractérisée en ce**
**que** le système fermé de refroidissement par liquide (15) est disposé de manière à être entièrement enfermé par la structure d'enveloppe (1) de l'unité de propulsion,
**que** le système fermé de refroidissement par circulation de gaz (12) est disposé de manière à être entièrement enfermé par la structure d'enveloppe (1) de l'unité de propulsion, et
**que** l'échangeur de chaleur gaz/liquide (17) est disposé de manière à être entièrement enfermé par la structure d'enveloppe (1) de l'unité de propulsion.
